# EUROPEAN PATENT SPECIFICATION

(11) **EP 4 226 016 B1**
(45) Date of publication and mention of the grant of the patent: **29.01.2025**
(21) Application number: 21787471.8
(22) Date of filing: 08.10.2021
(51) Int. Cl.: E21B 33/127

(54) **EXPANSION APPARATUS**
EXPANSIONSVORRICHTUNG
APPAREIL D'EXPANSION

(30) Priority: 09.10.2020 GB 202016028
(43) Date of publication of application: 16.08.2023
(73) Proprietor: Pragma Well Technology Limited, Wellheads Industrial Estate Aberdeen AB21 7GA (GB)
(72) Inventor: PURKIS, Daniel, George, Aberdeen AB21 7GA (GB)
(74) Representative: Marks & Clerk LLP
(86) International application number: PCT/EP2021/077952
(87) International publication number: WO 2022/074242

(56) References cited:
- GB-A- 2 258 673
- US-A1- 2013 220 640
- US-A1- 2017 342 797
- US-A1- 2018 340 393

## Description

### Field

The present disclosure relates to a downhole expansion apparatus.

### Background

Expansion technology in the oil and gas field allows products to be deployed downhole as compact devices, travelling through narrow tubing, valves and other restrictions, to be precisely located in a well before expansion is activated. Expansion technology may be used to support many applications during the well lifecycle from construction through production to abandonment.

Historically, expansion technology has involved the use of machined inflatables, swellable packers which may swell on contact with fluids, cones, slips (slip wedge), etc.. While there have been attempts to develop products which are stronger, able to operate at higher pressures and have greater expansion ratios, the current availability and technical capability of such products remain limited.

US 2018/340393 A1 describes a seal including a fluid resistive cover; and a structured element disposed at an inside surface of the cover and drawable with the cover between a first position and a second position.

The background serves only to set a scene to allow a skilled reader to better appreciate the following description. Therefore, none of the above discussion should necessarily be taken as an acknowledgement that the discussion is part of the state of the art or is common general knowledge. One or more aspects/embodiments of the disclosure may or may not address one or more of the background issues.

### Summary

An aspect of the present disclosure relates to an expansion apparatus comprising:
an expandable element having a monolithic wall structure circumscribing a longitudinal axis and enclosing a space for receiving a pressurised fluid for use in inflating the expandable element between a non-expanded configuration and an expanded configuration;
the wall structure being formed by additive manufacturing to have an initial non-expanded profile in which a perimeter length of the wall structure is greater than an outer gauge perimeter of the wall structure,
wherein expansion during inflation is achieved by reforming the initial non-expanded profile of the wall structure to increase the outer gauge perimeter.

The wall structure formed by additive manufacturing is formed in its initial non-expanded profile in which the perimeter length of the wall structure is greater than the outer gauge perimeter of the wall structure. That is, the wall structure is formed in its initial non-expanded profile and in this initial non-expanded profile, the perimeter length of the wall structure is greater than the outer gauge perimeter of the wall structure.

The outer gauge perimeter is defined by an outer envelope of the wall structure.

The outer envelope envelops, completely encloses or enfolds the wall structure as if with a covering. The outer gauge perimeter may be the perimeter of the outer envelope of the wall structure. The outer envelope of the wall structure may be equivalent to the outer circumference of the wall structure. The outer gauge perimeter may be equivalent to the perimeter of the minimum sized aperture through which the wall structure may pass through. The outer gauge perimeter may be constant along the longitudinal axis of the expansion apparatus. The outer gauge perimeter may be constant in the non-expanded configuration or constant in the expanded configuration. The outer gauge perimeter may vary in an axial direction of the expansion apparatus.

As used herein, "additive manufacturing" refers generally to manufacturing processes wherein successive layers of material(s) are provided on each other to "build-up" layer-by-layer or "additively fabricate", the wall structure. This is compared to some subtractive manufacturing methods (such as milling or drilling), wherein material is successively removed to fabricate the wall structure. The successive layers generally fuse together to form a monolithic component which may have a variety of integral sub-components.

In particular, the manufacturing process may allow the expansion apparatus to be integrally formed and include a variety of features not possible when using prior manufacturing methods. For example, features of the expansion apparatus such as the monolithic structure and variation in perimeter length may not be possible with conventional manufacturing techniques. Furthermore, additive manufacturing may allow the outer gauge perimeter to remain constant in the non-expanded configuration or constant in the expanded configuration, or any desired perimeter depending on the application, use case and/or environment.

Further the expansion apparatus may be formed by additive manufacturing in its initial non-expanded profile in which the perimeter length is greater than the outer gauge perimeter. These may not be possible in conventional manufacturing techniques. Further, conventional techniques may damage the wall structure or alter the desired physical properties of the expansion element to achieve such a difference in perimeter length and outer gauge perimeter. For example, reshaping the wall structure through physical means to increase the perimeter length while maintaining the same outer gauge perimeter may negatively impact the physical properties of the expansion element. Forming the expansion apparatus in the configuration described through additive manufacturing may cause no such negative impact on the expansion element.

A common example of additive manufacturing is 3D printing; however, other methods of additive manufacturing are available. Rapid prototyping or rapid manufacturing are also terms which may be used to describe additive manufacturing processes.

Additive manufacturing enables manufacture to any suitable size and shape with various features which may not have been possible using prior manufacturing methods. Additive manufacturing may create complex geometries without the use of any sort of tools, moulds or fixtures, and with little or no waste material. Instead of machining the wall structure from solid billets of plastic or metal, much of which is cut away and discarded, the only material used in additive manufacturing is what is required to shape the part.

As such, the expansion apparatus may be manufactured to a particular application, i.e. the expansion apparatus may be bespoke to a particular environment. The wall structure is formed by additive manufacturing such that the increased outer gauge perimeter after inflation may be oversized, undersized, or precisely sized to fit the particular configuration. Furthermore, the wall structure may be formed with an outer gauge perimeter suitable for passing through restrictive environments, such as downhole tubing or casing with prohibitive inner diameters, tools, valves etc.

Additive manufacturing may also permit for complex structures and geometries to be formed, packaged or constructed that are not possible using conventional subtractive manufacturing techniques. The wall structure may provide a desired "packaged" profile, e.g. the initial non-expanded profile, without restrictions from conventional subtractive manufacturing techniques. Furthermore, the wall structure may have a variety of shapes and configurations to provide the initial non-expanded profile in which the perimeter length is larger than the outer gauge perimeter. This allows for a wide range of geometries of the initial non-expanded profile.

The expansion apparatus may have a greater ratio of the perimeter length to the outer gauge perimeter than possible with apparatus manufactured by conventional subtractive manufacturing techniques. In other words, a greater perimeter length may be provided in a particular outer gauge perimeter than is possible with conventional subtractive manufacturing techniques. The wall structure formed by additive manufacturing may result in the expandable element having a ratio greater than ratios possible in apparatus manufactured by conventional subtractive manufacturing techniques. A greater ratio of the perimeter length to the outer gauge perimeter may allow for inflation of at least a portion of the expansion apparatus of over 300%. In other words, a significantly greater perimeter length, e.g. more than 300%, may be possible within the outer gauge diameter through additive manufacturing, as additive manufacturing allows for complex geometries of the wall structure which may increase the perimeter length to a value well beyond the outer gauge diameter.

The wall structure may have a significantly greater, e.g. 300%, surface area than the surface area defined by an outer envelope of the wall structure. Additive manufacturing may allow for the wall structure to be formed with complex geometries which are packaged within the outer envelope or outer gauge perimeter of the wall structure. These complex geometries may provide a greater surface area than the surface area of the outer envelope. The greater surface area may allow for a significantly higher expansion ratios, i.e. the ratio of the expansion element in the expanded configuration which is at least partially dependent on the surface area or perimeter length of the wall structure, and the expansion element in the non-expanded configuration which is at least partially dependent on the outer envelope or outer gauge perimeter.

For example, the wall structure may be formed by or comprise folds, grooves, pleats, corrugations, furrows or convolutions. For ease of explanation, the folds, grooves, pleats, corrugations, furrows or convolutions will be hereafter referred to as folds. In this context, the folds are not formed by the process of folding, but rather by additive manufacturing. The folds may have peaks and troughs. The folds may span a length of the wall structure. The folds may extend longitudinally. The folds may span the longitudinal axis of the wall structure. The folds may define the perimeter length of the wall structure. Adjacent peaks of the folds/convolutions may be almost in contact, or in contact in the non-expanded profile. Such a complex geometry may be simply not possible using conventional subtractive manufacturing techniques. Each of the folds may have an identical geometry, shape, dimension, configuration and/or profile. Alternatively, folds may have different geometries, shapes, dimensions, configurations and/or profiles. The geometries, shapes, dimensions, configurations and/or profiles of the folds may vary around a circumference of the expandable element and/or wall structure. For example, every second fold may have an identical geometry, shape, dimension, configuration and/or profile.

Additive manufacturing may provide additional features. For example, the perimeter length of the wall structure may vary along the longitudinal axis. In this respect the perimeter length of the wall structure at one axial location along the longitudinal axis may be different (i.e., longer or shorter) than that at a different axial location. The variation in perimeter length may be provided by a variation in the initial non-expanded profile axially along the wall structure which is directly provided by additive manufacturing. Such variability may be difficult, if at all possible, to provide using conventional subtractive manufacturing techniques.

In one example the wall structure may comprise:
a first perimeter length at a first axial location;
a second perimeter length at a second axial location; and
a third perimeter length at a third axial location which is intermediate the first and second axial locations.

The third perimeter length may be longer than the first and second perimeter lengths. By virtue of the locations of the first, second and third perimeter lengths the perimeter length may increase from the first axial location to the third axial location, and then decrease again towards the second axial location, i.e. from the third axial location to the second axial location.

The perimeter length may be the outer perimeter of the wall structure, expandable element and/or expansion apparatus.

The inner perimeter length of the wall structure may vary along the longitudinal axis. In this respect the inner perimeter length of the wall structure at one axial location along the longitudinal axis may be different (i.e., longer or shorter) than that at a different axial location. The variation in inner perimeter length may be provided by a variation in the initial non-expanded profile axially along the wall structure which is directly provided by additive manufacturing.

As described above in relation to the outer perimeter, in one example the wall structure may comprise:
a first inner perimeter length at a first axial location;
a second inner perimeter length at a second axial location; and
a third inner perimeter length at a third axial location which is intermediate the first and second axial locations.

The third inner perimeter length may be greater or longer than the first and second inner perimeter lengths. By virtue of the locations of the first, second and third inner perimeter lengths the inner perimeter length may increase from the first axial location to the third axial location, and then decrease again towards the second axial location, i.e. from the third axial location to the second axial location.

The described variation in outer perimeter length and inner perimeter length may be occur at the same or different axial locations. As such, the wall structure may have a constant or uniform thickness from the first and second axial locations. Alternatively, the wall structure may have a non-constant or non-uniform thickness through the longitudinal axis of the wall structure. An increased thickness at a particular axial location may increase the strength of the expansion apparatus, in particular, the increased thickness may increase the pressure rating of the expansion apparatus. A reduced thickness at a particular axial location may decrease the weight of the expansion apparatus. In addition, reduced thickness at a particular axial location may result in the expansion apparatus having hinge like action at the axial location. The reduced thickness may provide a predetermined rupture point where pressurised fluid within the apparatus and/or element ruptures the wall structure at a particular pressure. This may provide a known pressure threshold and known rupture point at the axial location. The fluid which ruptures the wall structure may then be used in other apparatus, for example, flow devices, valves, etc.

In particular, the wall structure may have a greater thickness at a transition area between the first and third sections and/or between the third and second sections. The increased thickness at one or more of the transition areas may increase the strength of the wall structure as the expandable element is inflated from the non-expanded configuration to the expanded configuration.

In one example, the first, second and third axial locations described with reference to the outer and inner perimeters are the same between the outer and inner perimeters.

The first section may extend from one longitudinal end region of the expandable element to one longitudinal end region of the third section. The second section may extend from the other longitudinal end region of the expandable element to the other longitudinal end region of the third section. The third section may extend between the first and second sections.

The outer gauge perimeter may increase through the first section, remain constant through the third section and decrease through the second section. The outer gauge diameter may decrease through the first section, remain constant through the third section and increase through the second section.

As previously stated, the wall structure may provide a desired "packaged" profile, e.g. the initial non-expanded profile, without restrictions from conventional subtractive manufacturing techniques. The packaged profile may correspond with the initial non-expanded profile in which the perimeter length of the wall structure is greater than the outer gauge perimeter of the well structure. The packaged profile, e.g. the initial non-expanded profile, may dictate the expanded profile. Accordingly, the expanded profile may be selected by selecting the non-expanded profile. The expanded profile may be accordingly be variable to any particular application or environment. For example, the expanded profile (or the non-expanded profile) may be a generally prolate spherical shape. Accordingly, the inflated expandable element may have a generally prolate spherical shape.

Even if the expansion apparatus is manufactured using conventional subtractive manufacturing techniques, and then rolling devices, or other devices, are used to create the non-expanded profile, this manufacturing process does not allow for complex geometries. In addition, an expansion apparatus manufactured in this manner may not be capable of inflation after being rolled. Furthermore, increasing the outer gauge perimeter during inflation after rolling the wall structure during manufacturing may not be possible.

One or more folds may not be present following inflation, or one or more residual folds may be present. Additional or alternatively, one or more folds may be radially compressed after inflation upon contact with a surface such that the folds are no longer present. Residual folds are defined as folds which remain after inflation. Residual folds still have a peak and a trough following inflation. The peak and trough of a residual fold may be separated by a smaller distance than prior to inflation. In other words, the depth of a residual fold may be less than the same fold prior to inflation.

The wall structure may comprise a series of convolutions distributed around the longitudinal axis. The expansion apparatus may comprise a convoluted wall profile.

The wall structure may be formed in a single piece. Accordingly, the wall structure may not have separate and/or unique moving or stationary pieces which may reduce failure modes and increase the strength, durability and/or longevity of the expansion apparatus when compared with conventional expansion apparatus.

An expansion apparatus having a monolithic wall structure may allow for faster, simpler and/or cheaper manufacture of the expansion apparatus. Furthermore, the described expansion apparatus may have increased pressure tolerances over conventional expansion apparatus due to the monolithic wall structure manufactured by additive manufacturing. The wall structure may be stronger and/or more durable than wall structures formed from multiple parts and/or formed by conventional subtractive manufacturing techniques.

The longitudinal axis may be the longitudinal axis of the expandable element and/or apparatus. The longitudinal axis may be a line passing through the centroid of cross sections of the expandable element and/or apparatus.

The expandable element and/or apparatus may be hollow. The space may be defined by the hollow element and/or apparatus. The element and/or apparatus may share the space.

The expandable element and/or apparatus may be a flow through device such that fluid may flow through the expandable element and/or apparatus. The expandable element and/or apparatus may comprise a valve. The valve may be configured to control fluid from passing through the expandable element and/or apparatus. The valve may be configured to prevent fluid from passing through the expandable element and/or apparatus. The valve may be configured to permit pressurisation of fluid flowing into the expandable element and/or apparatus. Such pressurised fluid may inflate the wall structure. The valve may be configured to allow fluid to exit a spaced defined by the element and/or apparatus.

The pressurised fluid may be liquid and/or gas. The pressurised fluid may be production fluid, hydraulic fluid, cement, water, stimulation fluid or some other combination thereof. In general, fluid pressure may increase within the space enclosed by the wall structure thereby applying a force to the wall structure to inflate the wall structure from the non-expanded configuration to the expanded configuration. In the expanded configuration the expansion apparatus may be used to seal a surface.

As described, the pressurised fluid is for use in inflating the expandable element. The inflating may be partial inflation of the expandable element. The expansion apparatus and/or expandable element may be single use, in that the apparatus and/or element may only inflate between the non-expanded configuration and the expanded configuration, and deflation from the expanded configuration to the non-expanded configuration may not be possible due to the material properties of the wall structure. Inflation may plastically deform the expandable element and/or well structure such that, beyond some natural elastic recovery, further plastic deformation may be required to collapse the element and/or structure to, at least partially, return to the non-expanded configuration and/or retrieve the expansion apparatus. The expansion apparatus may thus be single-use only. The expansion apparatus may be disposable or retrievable after inflation.

Plastic deformation to at least partially return the inflated apparatus and/or element to the non-expanded configuration may be provided by applying pressure to the outer surface of the wall structure to deform the structure, and/or by applying a negative pressure to the volume defined by the wall structure to collapse the structure. Plastic deformation to retrieve the apparatus by applying pressure to the outer surface of the wall structure to deform the structure, and/or by applying a negative pressure to the volume defined by the wall structure to collapse the structure may not return the apparatus and/or element to the non-expanded configuration, but retract and/or collapse the structure such that the expansion apparatus may be retrieved.

The apparatus and/or element may be substantially inelastic in that the apparatus and/or element may not return to the non-expanded configuration after fluid pressure is reduced. The apparatus and/or element may remain in the expanded configuration after inflation and/or fluid pressure is reduced.

Fluid pressure may directly act on the wall structure during inflation. Alternatively the fluid pressure may inflate a bladder or similar structure which in turn acts on the wall structure. The bladder may be secured within the expandable element to the longitudinal ends of the expansion apparatus. Alternatively, the bladder may be secured within the expandable element at intermediate points within the apparatus.

The expansion apparatus may further comprise a coating. The coating may ensure a tight seal between the wall structure and a surface upon inflation. The coating may comprise an elastomer, for example rubber, neoprene, butyl rubber, elastomeric polymers and thermoplastic elastomers (TPE). The coating may comprise PTFE, or similar. The coating may be silicon based. The coating may be applied after forming the expansion apparatus. Alternatively, the coating may be directly formed on the expandable element by additive manufacturing.

Suitable additive manufacturing techniques in accordance with the present disclosure include, for example, Fused Deposition Modeling (FDM), Selective Laser Sintering (SLS), 3D printing such as by inkjets and laserjets, Sterolithography (SLA), Direct Selective Laser Sintering (DSLS), Electron Beam Sintering (EBS), Electron Beam Melting (EBM), Laser Engineered Net Shaping (LENS), Electron Beam Additive Manufacturing (EBAM), Laser Net Shape Manufacturing (LNSM), Direct Metal Deposition (DMD), Digital Light Processing (DLP), Continuous Digital Light Processing (CDLP), Direct Selective Laser Melting (DSLM), Selective Laser Melting (SLM), Direct Metal Laser Melting (DMLM), Direct Metal Laser Sintering (DMLS), Material Jetting (MJ), NanoParticle Jetting (NPJ), Drop On Demand (DOD), Binder Jetting (BJ), Multi Jet Fusion (MJF), Laminated Object Manufacturing (LOM) and other known processes.

The additive manufacturing described herein may be used for forming components using any suitable material. For example, the material may be plastic, metal, composite, concrete (?), ceramic, polymer, epoxy, photopolymer resin, or any other suitable material that may be in solid, liquid, powder, sheet material, wire, or any other suitable form or combinations thereof. More specifically, the expansion apparatus described herein may be formed in part, in whole, or in some combination of materials including but not limited to pure metals, nickel alloys, chrome alloys, titanium, titanium alloys, magnesium, magnesium alloys, aluminium, aluminium alloys, iron, iron alloys, stainless steel, and nickel or cobalt based superalloys (e.g., those available under the name Inconel^{®} available from Special Metals Corporation). These materials are examples of materials suitable for use in additive manufacturing processes which may be suitable for the fabrication of the expansion apparatus described herein.

As noted above, the additive manufacturing process disclosed herein allows a single component, such as the expansion apparatus or the expandable element, to be formed from multiple materials. Thus, the apparatus and/or element described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application.

Forming the expansion apparatus by additive manufacturing reduces waste compared with traditional subtractive manufacturing techniques or machining processes in which pieces are cut from larger blocks of material.

As previously stated, the wall structure may be formed by or comprise folds. The folds may be circumferential. The folds may be curved. Each fold may comprise a generally arcuate section with axially extending sections extending from either end thereof. The folds may have a generally circular serpentine cross-section in a circumferential direction. The folds may be axially, circumferentially or radially tortuous. The folds may have a canted profile. The folds may have a profile that is deviated from a radial line of the expandable element. The folds may extend axially. The folds may have a circumferential component. The folds may have a helix profile.

The folds may define peaks with troughs between adjacent peaks. A peak define a greater distance from the axial centre of the wall structure than the respective trough. A peak may be defined as having a generally teardrop shape such that the base of the peak is almost in contact. In this manner, a single peak may define a pocket within fluid may enter during inflation. The pocket may be configured to expand upon inflation.

Adjacent or non-adjacent folds in a longitudinal or radial section of the wall structure may have different geometries, configurations, thicknesses, etc. Different portions of the wall structure may have folds with different geometries, configurations, thicknesses, etc. For example, folds in some longitudinal sections of the wall structure may have peaks that are generally tear drop shaped, while folds in other longitudinal sections of the wall structure may peaks with bases that are farther apart, i.e. not close to being in contact. Having different fold profiles in sections of the wall structure may alter the inflation profile of the expandable element. In this context, the inflation profile may be defined as the manner in which the expandable element transitions from the initial non-expanded configuration to the expanded configuration upon increase of fluid pressure. For example, certain longitudinal sections of the wall expandable may have particular fold configurations which results in expansion at a lower fluid pressure than other portions. Accordingly, a variety of inflation profiles may be obtainable by varying the wall structure during additive manufacturing. Such bespoke control may not be possible with conventional subtractive manufacturing techniques.

Altering the shape, dimension and configuration of one or more of the peaks, troughs and pockets may alter the inflation profile of the expansion apparatus.

Each fold may have an associated depth. The depth may be defined at the distance from the peak of a fold to the trough of the fold. The fold depth may vary along the longitudinal axis of the wall structure.

A depth of the folds at the third section may be greater than a depth of folds at the first section. Additionally the depth of the folds at the third section may be greater than a depth of the folds at the second section. As such, the depth of the folds at the third section may be the greatest amongst all of the folds thru the expansion apparatus. The depth of the folds at the first and second sections may be the same.

The folds in a particular section (first, second, third) may have the same or different depths. For example, the folds in the third section all have the same depth.

The number of folds in each section may be same, i.e. the number of folds the first, second and third sections may all be the same.

As previously stated, the wall structure encloses a space for receiving a pressurised fluid for use in inflating the expandable element between a non-expanded configuration and an expanded configuration. The folds may at least partially flatten when the expandable element is inflated to the expanded configuration.

The wall structure also has an inner perimeter length. Similar to the outer perimeter, the inner perimeter length may be greater than an inner gauge perimeter of the wall structure. The inner gauge perimeter may be defined by an inner envelope of the wall structure. The inner envelope envelops, completely encloses or enfolds the space enclosed by the wall structure as if with a covering. The inner gauge perimeter may be the perimeter of the inner envelope of the wall structure. The inner envelope of the wall structure may be equivalent to the inner circumference of the wall structure. The inner gauge perimeter may be constant through the longitudinal axis of the expansion apparatus. The inner gauge perimeter may be constant in the non-expanded configuration or constant in the expanded configuration. The inner gauge perimeter may vary in an axial direction of the expansion apparatus.

The inner gauge perimeter may increase through the described first section, remain constant through the described third section and decrease through the described second section. The inner gauge diameter may decrease through the first section, remain constant through the third section and increase through the second section.

The space enclosed by the wall structure may be generally cylindrically shaped. The space enclosed by the wall structure in the first, second and third sections may have different shapes. For example, the spaces enclosed by the first and second sections may be generally frustum shaped, and the space enclosed by the third section may be generally cylindrical shaped. Thus, the enclosed space may transition from frustum shaped to cylindrical shaped and then back to frustum shaped. This transition may be present in the non-expanded configuration and/or in the expanded configuration.

The expansion apparatus may be configured for use in the oil and gas field in downhole environments. The expansion apparatus may be configured to form part of a work string, a drill string or another string for use in an oil and gas well. The expansion apparatus may comprise one or more connectors for connection to one or more valves, tools, strings, tubing, casing or other downhole devices.

The expansion apparatus may be configured to pass through downhole casing, tubing, valves, tools and other restrictions. The expansion apparatus may be sized to pass through these restrictions without impediment. In particular, the expansion apparatus may pass through downhole casing, tubing, valves, tools and other restrictions in the non-expanded configuration. The expansion apparatus may be configured to be run through the described restrictions without impediment. The expansion apparatus may be located within the downhole environment. Once the expansion apparatus is located in the set location within the wellbore, the expansion apparatus may be inflated to at least partially restrict fluid flow. Restricting or blocking fluid flow in a wellbore may support various downhole activities during construction, deployment, production and abandonment of the well.

The expansion apparatus may be configured to be placed in a wellbore, in particular, the expansion apparatus may be configured to positioned downhole in a wellbore. The expansion apparatus may be configured to be inflated between the non-expanded configuration and the expanded configuration upon downhole fluid pressurising the space.

The expansion apparatus may be configured to partially or fully restrict, or block fluid flow. Such partial or full restriction, or blocking of fluid flow may be beneficial and/or necessary during activities such as zonal isolation; water or gas shut off; temporary abandonment; coiled tubing pack-off during scale squeeze, cement squeeze, perforation wash or flow testing; production straddle for zonal shut off; utility pack-off for injection valve, storm choke or downhole choke hang off; utility pack-off for cement retain hang off/stinging; cement platform for cement retain hang off/stinging; cement platform for cement plug support; and bridge plug for permanent well abandonment.

The zonal isolation may include isolating reservoir zones to prevent, gas and/or sand ingress. As described above the expansion apparatus may be used for zonal treating such as scale squeeze, perforation washes or flow testing on coiled tubing. The expansion apparatus may support cement plug or cement retainer installation.

The expansion apparatus may be used as a bridge plug. A bridge plug is a downhole tool that is located and set to isolate a downhole part of a wellbore of an oil and gas well i.e. lower wellbore. Bridge plugs may be permanent or retrievable, enabling the lower wellbore to be permanently sealed from production or temporarily isolated from a treatment conducted on an upper zone.

The expansion apparatus may create a seal with a surface when the expandable element is in the expanded configuration. The surface may be the inner wall of a wellbore. The wellbore may be lined with casing, tubing or liner. The surface may be the inner surface of casing, tubing or liner. The seal may at least partially prevents and/or restricts fluid flow between the outer surface of the central section of the expansion apparatus and the inner surface. The surface may be a formation surface.

The expansion apparatus may be used in an open hole environment. An open hole environment may have an irregular wall geometry. Inflation of the apparatus and/or element may permit compliance with the irregular wall geometry of the open hole surface. The expansion apparatus may create a seal with a formation surface present in an open hole portion of an oil and gas well when the expandable element is in the expanded configuration.

The expansion apparatus may be configured to fit substantially perfectly within casing/tubing when the expandable element is in the expanded configuration. The expansion apparatus may be configured to fit within casing/tubing when the expandable element is in the non-expanded configuration is free to be located within the casing/tubing at any longitudinal or axial position while minimising the space between the outer surface of the expansion apparatus and the inner surface of the casing/tubing.

Alternatively the expansion apparatus may be configured to be undersized or oversized when the expandable element is in the expanded configuration for the casing/tubing.

The apparatus may define a footprint. The footprint of the expansion apparatus may be defined as a surface of the expansion apparatus that creates a seal or otherwise engages a surface when the expandable element is in the expanded configuration. The footprint may correspond with the third section in the expanded configuration. The footprint may be configured to apply a set amount of pressure on a surface in the expanded configuration. The set amount of pressure may match the rock strength of a formation. In this manner, the expansion apparatus does not break the rock in the expanded configuration. The set pressure may also correspond with, be below or be above, the yield strength of the piping, tubing or casing within which the apparatus is located.

As previously described, the expandable element expands through inflation. Pressurised fluid inflates the element. The pressurised fluid may be provided via one or more ports located within tubing, casing, piping or similar around which the expansion element is sealed. The port may be normally closed. The port may be controlled to open and allow fluid pressure to inflate the element. The port may be controlled via a communication signal. The signal may be an electromagnetic, acoustic, wireless, wired or similar signal.

As previously stated, the expandable element may be used to create a seal or against with a surface when the expandable element is in the expanded configuration. The seal may be created by an outer surface of the expansion apparatus. Alternatively or in addition, the seal may be created by a layer surrounding the expansion apparatus.

The expansion apparatus may further comprise a layer surrounding at least a portion of the expandable element. The layer may be an elastomer. The layer may be a coating. The coating may be silicon based. The layer may be formed by a cover, shroud or sleeve. The layer may match the initial non-expanded profile of the wall structure. Alternatively, the layer may match an expanded profile of the wall structure. The layer may have folds similar to the described folds of the wall structure. Similar to the described folds of the wall structure, the folds of the layer may not be formed by the process of folding, but rather by additive manufacturing. In particular, the folds may match the folds of the wall structure. The peaks and troughs of the folds of the layer may match the peaks and trough of the folds of the wall structure. The layer may be used to create a seal with a surface when the expandable element is in the expanded configuration. In particular, the layer may be used to create a seal with a surface upon inflation and transition of the expandable element from the non-expanded configuration to the expanded configuration. The layer may comprise rubber or another material capable of deformation. The layer or coating may be applied after forming the expansion apparatus. Alternatively, the layer or coating may be directly formed on the expandable element by additive manufacturing.

The layer may additionally or alternatively be configured may restrict inflation of the expandable element. For example, the layer may be shaped, sized and/or positioned to surround a particular portion of the expandable element to restrict inflation of that portion of the expandable element during inflation. Restricting inflation of a particular portion of the expandable element may urge inflation of the expandable element at a particular longitudinal or radial location. This may result in rupture of the element at that location. In this manner, controlled rupture of the element may be achieved.

The expansion apparatus may take the form of a plug, a cup expander, a straddle, and/or a drum and ball catcher.

As previously described, the perimeter length of the wall structure may increase from the first axial location to the third axial location, and then decrease again towards the second axial location. As such, the wall structure may have a non-zero flank angle between the first axial location and the third axial location when the expandable element is in the non-expanded or expanded configuration. Similarly, the wall structure may have a non-zero flank angle between the second axial location and the third axial location. The non-zero flank angle between the first axial location and the third axial location may define a first flank angle. The non-zero flank angle between the second axial location and the third axial location may define a second flank angle. The flank angles may be greater than zero. The flank angle may be equal. Alternatively, the first flank angle may be greater than or less than the second flank angle. Varying the flank angles may vary the length of the footprint of the expansion apparatus. Varying the flank angles may provide result in a asymmetric expansion apparatus, i.e. the expansion apparatus may have an asymmetric body. The expansion apparatus may accordingly inflate at different rates along the longitudinal axis of the expansion apparatus. In particular, an asymmetric expansion apparatus may result in one longitudinal side of the expansion apparatus inflating at a different rate (e.g. faster) than another longitudinal side of the expansion apparatus.

The flank angle may be defined as the angle formed between the longitudinal axis and a line connecting to axial locations on the expansion locations on the wall structure. The first flank angle may be defined as the angle formed between the longitudinal axis and the line connecting a first and third axial locations. The second flank angle may be defined as the angle formed between the longitudinal axis and a line connecting the second and third axial locations.

The expansion apparatus may further comprise one or more anchors. The anchor may be used to anchor, at least temporarily, the expansion apparatus to a surface such as an inner surface of a wellbore, in the non-expanded configuration. The anchor may provide a temporary anchor to a surface to locate the expansion apparatus prior to inflation. The anchor may take the form of one or more of a slip, shoulder, extrusion and teeth. The slips may be wedge-shaped to anchor to a surface. The slip may be made of steel, any metal alloys, composites, etc. The shoulder may protrude from the wall structure to engage a surface prior to inflation.

The expansion apparatus may further comprise a backup system. The backup system may provide a seal in addition to or alternative to any seal provided by the expansion apparatus. The backup system may ensure that the expansion apparatus provides a seal in case of failure and/or slippage of the expansion apparatus. The backup system may provide an anti-extrusion function. The backup system may be configured to provide axial support to minimise extrusion of the expansion apparatus. The backup system may take the form of one or seal, rings, O-rings, cup-type seal, backup shoe or combinations thereof.

As previously described, the expansion apparatus may comprise one or more connectors. The connector may be for connection to one or more valves, tools, strings, tubing, casing or other downhole devices. The connector may be located at either longitudinal end of the expansion apparatus. The connector may be affixed to the expansion apparatus, or may be integrally formed therewith. In particular, the connector may be formed as part of the monolithic wall structure. The connector may be formed by additive manufacturing. The connector and wall structure may be jointly formed by additive manufacturing. One connector may be associated with one longitudinal end of the expansion apparatus and another connector may be associated with the other longitudinal end of the expansion apparatus. In particular, one connector may be associated with one longitudinal end of the first section. Another connector may be associated with one longitudinal end of the second section. The connector may be configured to be connected to a fluid source such that a fluid may flow through the space enclosed by the wall structure. The connector may be threaded. The threading may be on an inner surface and/or outer surface of the connector. The connector may be generally hexagonal in shape. The connector may resist inflation, i.e. when exposed to pressures intended to inflate the wall structure the connector may not be expandable. A region of the expansion apparatus proximate the connector may resist inflation.

One or more longitudinal ends of the expansion apparatus may be sealed. Sealing at least one end of the expansion apparatus may at least partially prevent fluid ingress or egress from/into the space enclosed by the wall structure. In particular, one longitudinal end of the expansion apparatus may be associated with a connector as described, and the other longitudinal end of the expansion apparatus may be sealed to prevent fluid ingress or egress. As such, fluid may flow into the space through the connector, but then not be able to flow out of the space.

The described expansion apparatus may allow for higher expansion ratios than known expansion apparatus used in wellbore environments. For example, the described expansion apparatus may allow for over 300% inflation of a portion of the expandable element (e.g. the described third section) from the non-expanded configuration to the expanded configuration. This may be due to an increased strength of the monolithic wall structure when formed by additive manufacturing over conventional subtractive manufacturing techniques. In particular, the volume enclosed by the wall structure may increase by over 300% during inflation. Alternatively or in addition, the outer gauge perimeter of the wall structure may increase by over 300% during inflation. Alternatively or in addition, the envelope of the wall structure may increase by over 300% during inflation. Additive manufacturing may permit varying the perimeter length to a desired length. Additive manufacturing may permit varying the increase in the outer gauge perimeter upon expansion during inflation.

A significantly greater perimeter length, e.g. more than 300%, may be possible within the outer gauge diameter through additive manufacturing, as additive manufacturing allows for complex geometries of the wall structure which may increase the perimeter length to a value well beyond the outer gauge diameter. In other words, more perimeter length or surface area of the wall structure may be packed into the outer gauge perimeter or envelope which may allow for greater expansion of the expandable element upon inflation than conventionally possible.

Any of the described expansion apparatus may relate to: a seal which includes an expansion sealing apparatus; a bridge plug which includes a bridge plug apparatus; an anchor which may provide an anchor within a bore such as a wellbore, and includes an expansion anchor apparatus; and an anti-extrusion apparatus which includes an anti-expansion extrusion apparatus. Any of the described expansion apparatus may be used to expand a tool such as a mechanical slip or anti-extrusion device. Any of the described expansion apparatus may be used in place of a mechanical tool such as a mechanical slip or anti-extrusion device. The expansion apparatus may provide a seal, anchor, support and/or anti-extrusion function. The expansion apparatus may provide a force, e.g. a wedge function, to operate one or more moveable elements. For example, the expansion apparatus may provide a wedge function to extend one or more arms or petals.

Another aspect of the present disclosure relates to a method of providing a seal, the method comprising:
providing the described expansion apparatus;
locating the expansion apparatus in a wellbore; and
inflating the expansion apparatus in the wellbore to provide a seal.

Another aspect of the present disclosure relates to a method of providing a seal, the method comprising:
providing an expansion apparatus comprising:
   an expandable element having a monolithic wall structure circumscribing a longitudinal axis and enclosing a space for receiving a pressurised fluid for use in inflating the expandable element between a non-expanded configuration and an expanded configuration;
   the wall structure being formed by additive manufacturing to have an initial non-expanded profile in which a perimeter length of the wall structure is greater than an outer gauge perimeter of the wall structure,
locating the expansion apparatus in a wellbore; and
inflating the expansion apparatus to reform the initial non-expanded profile of the wall structure to increase the outer gauge perimeter to provide a seal bridge plug.

The describe methods may alternatively or additionally provide an anchor, bridge plug and/or anti-extrusion functionality.

Locating the expansion apparatus in a wellbore may comprise locating the expansion apparatus with one or more anchors. The anchors may be as previously described.

Locating the expansion apparatus may comprise positioning the expansion apparatus using one or more downhole tools, running tools, packers, or other downhole devices or apparatus. The expansion apparatus may be positioned in tubing, casing and/or liner.

The wellbore may form part of an appraisal well, an onshore well, offshore well, injector well, producer well, test well, or open hole well, or combinations thereof.

Inflating the expansion apparatus may be associated with a variety of wellbore operations. Such operations may include zonal isolation; water or gas shut off; temporary abandonment; coiled tubing pack-off during scale squeeze, cement squeeze, perforation wash or flow testing; production straddle for zonal shut off; utility pack-off for injection valve, storm choke or downhole choke hang off; utility pack-off for cement retain hang off/stinging; cement platform for cement retain hang off/stinging; cement platform for cement plug support; and bridge plug for permanent well abandonment. Further operations may include isolating reservoir zones to prevent, gas and/or sand ingress, zonal treating such as scale squeeze, perforation washes or flow testing on coiled tubing, cement plug or cement retainer installation. In addition, inflating the expansion apparatus may be associated with completion, workover, decommissioning, cement plug support, well testing, clean-up or any other well operation.

Inflating the expansion apparatus may comprise inflating the expansion apparatus from the non-expanded configuration to the expanded configuration.

Inflating the expansion apparatus may comprise inflating the expansion apparatus with downhole fluid. The downhole fluid may be production fluid, cement, water, stimulation fluid, or some combination thereof.

Inflating may comprise increasing the outer gauge perimeter of the wall structure of the expansion apparatus. Inflating may comprise increases the volume of the space enclosed by the monolithic wall structure of the expansion apparatus.

Inflating the expansion apparatus may comprise providing a seal with a surface of the expansion apparatus. For example, the outer surface of the wall structure may provide a seal.

Inflating the expansion apparatus may comprise providing a seal with a sleeve surrounding the expansion apparatus. The sleeve may be as previously described.

Another aspect of the present disclosure relates to a method of manufacturing the described expansion apparatus by additive manufacturing.

Another aspect of the present disclosure relates to a method of manufacturing an expansion apparatus, the method comprising:
forming, by additive manufacturing, an expansion apparatus comprising an expandable element having a monolithic wall structure circumscribing a longitudinal axis and enclosing a space for receiving a pressurised fluid for use in inflating the expandable element between a non-expanded configuration and an expanded configuration, the wall structure having an initial non-expanded profile in which a perimeter length of the wall structure is greater than an outer gauge perimeter of the wall structure,
wherein the initial non-expanded profile is reformable by inflation to increase the outer gauge perimeter.

Forming the expansion apparatus may comprise forming the expansion apparatus based on one or more parameters of a well.

The method may further comprise collecting the one or more parameter of the well. The parameter may be collected by one or more downhole tools, such as sensors, gauges, etc.

Another aspect of the disclosure relates to a method of forming an expansion apparatus for use in a downhole environment, such as the expansion apparatus as defined herein.

Another aspect of the disclosure relates to an integrally formed expansion apparatus for use in a downhole environment, the expansion apparatus formed by circumferential folds spanning a length of the expansion apparatus, the folds comprising: a first section, a second section and a central section extending longitudinally between the first and second sections,
wherein an outer perimeter of the central section is greater than an outer perimeter of the first section and greater than an outer perimeter of the second section.

The expansion apparatus may configured to expand from an unexpanded state to an expanded state.

The folds at the central section may create a seal with a surface when the expansion apparatus is in the expanded state.

A depth of folds at the central section may be greater than a depth of folds at the first section and greater than a depth of folds at the second section.

In the unexpanded state, folds at the central section may have a greater depth than folds at the first section and folds at the second section.

An inner perimeter of the central section may be greater than an inner perimeter of the first section and greater than an inner perimeter of the second section.

The folds may have a non-uniform or a uniform thickness.

Folds may have a greater thickness at a transition area between the first and central sections and/or a greater thickness at a transition area between the central and second sections.

An internal volume of the central section may be greater than an internal volume of the first section and/or an internal volume of the second section.

The first section may extend from one longitudinal end of the expansion apparatus to one longitudinal end of the central section, and the second section may extend from the other longitudinal end of the central section to the other longitudinal end of the expansion apparatus.

The expansion apparatus may have a monolithic structure.

The expansion apparatus may be formed by additive manufacturing.

Another aspect of the present disclosure relates to a method of at least partially plugging a wellbore, the method comprising:
positioning an integrally formed expansion apparatus in a wellbore, the expansion apparatus formed by circumferential folds spanning a length of the expansion apparatus, the folds comprising: a first section, a second section and a central section extending longitudinally between the first and second sections, wherein an outer perimeter of the central section is greater than an outer perimeter of the first section and greater than an outer perimeter of the second section; and
inflating the expansion apparatus with downhole fluid.

Inflating the expansion apparatus may comprise expanding the expansion apparatus from an unexpanded state to an expanded state.

Expanding the expansion apparatus may comprise creating a seal between the expansion apparatus and a surface.

Inflating the expansion apparatus may comprises increasing an internal volume of the central section.

Increasing may comprise increasing an internal volume of the central section more than an internal volume of the first section, and more than an internal volume of the second section.

According aspect of the present disclosure relates to a method of forming an expansion apparatus for use in a downhole environment, the method comprising:
continuously forming circumferential folds longitudinally into an integrally formed expansion apparatus, the folds comprising: a first section, a second section and a central section extending longitudinally between the first and second sections,
wherein an outer perimeter of the central section is greater than an outer perimeter of the first section and greater than an outer perimeter of the second section.

Continuously forming may comprise forming circumferential folds by additive manufacturing.

Continuously forming may comprise:
forming circumferential folds into the first section;
forming circumferential folds into the central section; and
forming circumferential folds into the second section,
wherein the first section extends from one longitudinal end of the expansion apparatus to one end longitudinal of the central section, and the second section extends from the other longitudinal end of the central section to the other longitudinal end of the expansion apparatus.

The described expansion apparatus may be incorporated into a tool string, production string, drill string, running string, or any other oil and gas tooling.

The described additive manufacturing typically involves processes in which components are fabricated based on three-dimensional (3D) information, for example a three-dimensional computer model (or design file), of the component.

Accordingly, examples described herein not only include the expansion apparatus and associated components, but also methods of manufacturing such the expansion apparatus or associated components via additive manufacturing and computer software, firmware or hardware for controlling the manufacture of the expansion apparatus and associated components via additive manufacturing. All future reference to "product" are understood to include the described expansion apparatus and all associated components.

The structure of the product may be represented digitally in the form of a design file. A design file, or computer aided design (CAD) file, is a configuration file that encodes one or more of the surface or volumetric configuration of the shape of the product. That is, a design file represents the geometrical arrangement or shape of the product.

Design files may take any now known or later developed file format. For example, design files may be in the Stereolithography or "Standard Tessellation Language" (.stl) format which was created for stereolithography CAD programs of 3D Systems, or the Additive Manufacturing File (.amf) format, which is an American Society of Mechanical Engineers (ASME) standard that is an extensible markup-language (XML) based format designed to allow any CAD software to describe the shape and composition of any three-dimensional object to be fabricated on any additive manufacturing printer.

Further examples of design file formats include AutoCAD (.dwg) files, Blender (.blend) files, Parasolid (.x_t) files, 3D Manufacturing Format (.3mf) files, Autodesk (3ds) files, Collada (.dae) files and Wavefront (.obj) files, although many other file formats exist.

Design files may be produced using modelling (e.g. CAD modelling) software and/or through scanning the surface of a product to measure the surface configuration of the product.

Once obtained, a design file may be converted into a set of computer executable instructions that, once executed by a processer, cause the processor to control an additive manufacturing apparatus to produce a product according to the geometrical arrangement specified in the design file. The conversion may convert the design file into slices or layers that are to be formed sequentially by the additive manufacturing apparatus. The instructions (otherwise known as geometric code or "G-code") may be calibrated to the specific additive manufacturing apparatus and may specify the precise location and amount of material that is to be formed at each stage in the manufacturing process. As discussed above, the formation may be through deposition, through sintering, or through any other form of additive manufacturing method.

The code or instructions may be translated between different formats, converted into a set of data signals and transmitted, received as a set of data signals and converted to code, stored, etc., as necessary. The instructions may be an input to the additive manufacturing system and may come from a part designer, an intellectual property (IP) provider, a design company, the operator or owner of the additive manufacturing system, or from other sources. An additive manufacturing system may execute the instructions to fabricate the product using any of the technologies or methods disclosed herein.

Design files or computer executable instructions may be stored in a (transitory or non-transitory) computer readable storage medium (e.g., memory, storage system, etc.) storing code, or computer readable instructions, representative of the product to be produced. As noted, the code or computer readable instructions defining the product that may be used to physically generate the object, upon execution of the code or instructions by an additive manufacturing system. For example, the instructions may include a precisely defined 3D model of the product and may be generated from any of a large variety of well-known computer aided design (CAD) software systems such as AutoCAD^{®}, TurboCAD^{®}, DesignCAD 3D Max, etc. Alternatively, a model or prototype of the component may be scanned to determine the three-dimensional information of the component.

Accordingly, by controlling an additive manufacturing apparatus according to the computer executable instructions, the additive manufacturing apparatus may be instructed to print out the product.

In light of the above, embodiments include methods of manufacture via additive manufacturing. This includes the steps of obtaining a design file representing the product and instructing an additive manufacturing apparatus to manufacture the product in assembled or unassembled form according to the design file. The additive manufacturing apparatus may include a processor that is configured to automatically convert the design file into computer executable instructions for controlling the manufacture of the product. In these embodiments, the design file itself may automatically cause the production of the product once input into the additive manufacturing device. Accordingly, in this embodiment, the design file itself may be considered computer executable instructions that cause the additive manufacturing apparatus to manufacture the product. Alternatively, the design file may be converted into instructions by an external computing system, with the resulting computer executable instructions being provided to the additive manufacturing device.

Given the above, the design and manufacture of implementations of the subject matter and the operations described in this specification may be realised using digital electronic circuitry, or in computer software, firmware, or hardware, including the structures disclosed in this specification and their structural equivalents, or in combinations of one or more of them. For instance, hardware may include processors, microprocessors, electronic circuitry, electronic components, integrated circuits, etc. Implementations of the subject matter described in this disclosure may be realised using one or more computer programs, i.e., one or more modules of computer program instructions, encoded on computer storage medium for execution by, or to control the operation of, data processing apparatus. Alternatively or in addition, the program instructions may be encoded on an artificially generated propagated signal, e.g., a machine-generated electrical, optical, or electromagnetic signal that is generated to encode information for transmission to suitable receiver apparatus for execution by a data processing apparatus. A computer storage medium may be, or be included in, a computer-readable storage device, a computer-readable storage substrate, a random or serial access memory array or device, or a combination of one or more of them. Moreover, while a computer storage medium is not a propagated signal, a computer storage medium may be a source or destination of computer program instructions encoded in an artificially generated propagated signal. The computer storage medium may also be, or be included in, one or more separate physical components or media (e.g., multiple CDs, disks, or other storage devices).

Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or other manufacturing technology.

Another aspect of the present disclosure relates to a computer program comprising computer executable instructions that, when executed by a processor, cause the processor to control an additive manufacturing apparatus to manufacture the described expansion apparatus.

Another aspect of the present disclosure relates to a method of manufacturing an expansion apparatus via additive manufacturing, the method comprising:
obtaining an electronic file representing a geometry of the described expansion apparatus; and
controlling an additive manufacturing apparatus to manufacture, over one or more additive manufacturing steps, the expansion apparatus according to the geometry specified in the electronic file.

Aspects of the inventions described may include one or more examples, embodiments or features in isolation or in various combinations whether or not specifically stated (including claimed) in that combination or in isolation. It will be appreciated that one or more embodiments/examples may be useful in a downhole environment.

### Brief Description of the Figures

A description is now given, by way of example only, with reference to the accompanying drawings, in which:
Figure 1 is a perspective view of an expansion apparatus illustrated in a non-expanded configuration;
Figures 2A to 2C are sequential perspective views of the expansion apparatus of Figure 1 being formed through an additive manufacturing process;
Figure 3 is a perspective view of an axial segment of the expansions apparatus of Figure 1;
Figure 4 is a perspective view of the expansion apparatus of Figure 1 illustrated in an expanded configuration;
Figure 5A to 5C are elevation sectional views of alternative forms of an expansion apparatus taken along the longitudinal axis in non-expanded configurations;
Figure 6A is a perspective view of an alternative form of an expansion apparatus in a non-expanded configuration;
Figure 6B is an elevation sectional view of the expansion apparatus of Figure 6A taken along the longitudinal axis;
Figures 7A to 7C are sequential perspective views of the expansion apparatus of Figure 6A being formed through an additive manufacturing process;
Figure 8A is a perspective view of an expansion apparatus with a sleeve;
Figure 8B is a perspective sectional view of the expansion apparatus of Figure 8A taken along the longitudinal axis;
Figure 9A is a perspective view of an expansion apparatus in an expanded configuration;
Figure 9B is a sectional elevation view of the expansion apparatus of Figure 9A;
Figure 9C is a perspective elevation view the expansion apparatus of Figure 9A with a sleeve;
Figure 10 is a perspective view of a tool string comprising an expansion apparatus;
Figure 11A is a perspective view of an expansion apparatus in an expanded configuration;
Figure 11B is an elevation view of the expansion apparatus of Figure 11A;
Figure 12A is a perspective view of an expansion apparatus in an expanded configuration on a pipe;
Figure 12B is an elevation sectional view of the expansion apparatus and pipe of Figure 12A taken along the longitudinal axis;
Figure 12C is an elevation sectional view of the expansion apparatus and a pipe of Figure 12A taken along the longitudinal axis;
Figure 13A is a perspective view of an expansion apparatus in an expanded configuration having a slip and on a pipe;
Figure 13B is an elevation sectional view of the expansion apparatus having the slip on the pipe of Figure 13A; and
Figure 14 is a perspective view of an axial segment of an expansions apparatus.

### Description of Specific Embodiments

The foregoing summary, as well as the following detailed description of certain embodiments will be better understood when read in conjunction with the accompanying drawings. As will be appreciated, like reference characters are used to refer to like elements throughout the description and drawings. As used herein, an element or feature recited in the singular and preceded by the word "a" or "an" should be understood as not necessarily excluding a plural of the elements or features. Further, references to "one example" or "one embodiment" are not intended to be interpreted as excluding the existence of additional examples or embodiments that also incorporate the recited elements or features of that one example or one embodiment. Moreover, unless explicitly stated to the contrary, examples or embodiments "comprising", "having" or "including" an element or feature or a plurality of elements or features having a particular property might further include additional elements or features not having that particular property. Also, it will be appreciated that the terms "comprises", "has" and "includes" mean "including but not limited to" and the terms "comprising", "having" and "including" have equivalent meanings.

As used herein, the term "and/or" may include any and all combinations of one or more of the associated listed elements or features.

It will be understood that when an element or feature is referred to as being "on", "attached" to, "connected" to, "coupled" with, "contacting", etc. another element or feature, that element or feature may be directly on, attached to, connected to, coupled with or contacting the other element or feature or intervening elements may also be present. In contrast, when an element or feature is referred to as being, for example, "directly on", "directly attached" to, "directly connected" to, "directly coupled" with or "directly contacting" another element of feature, there are no intervening elements or features present.

It will be understood that spatially relative terms, such as "under", "below", "lower", "over", "above", "upper", "front", "back" and the like, may be used herein for ease of describing the relationship of an element or feature to another element or feature as depicted in the figures. The spatially relative terms may however, encompass different orientations in use or operation in addition to the orientation depicted in the figures.

Reference herein to "example" means that one or more feature, structure, element, component, characteristic and/or operational step described in connection with the example is included in at least one embodiment and or implementation of the subject matter according to the present disclosure. Thus, the phrases "an example," "another example," and similar language throughout the present disclosure may, but do not necessarily, refer to the same example. Further, the subject matter characterizing any one example may, but does not necessarily, include the subject matter characterizing any other example.

Reference herein to "configured" denotes an actual state of configuration that fundamentally ties the element or feature to the physical characteristics of the element or feature preceding the phrase "configured to".

Unless otherwise indicated, the terms "first," "second," etc. are used herein merely as labels, and are not intended to impose ordinal, positional, or hierarchical requirements on the items to which these terms refer. Moreover, reference to a "second" item does not require or preclude the existence of lower-numbered item (e.g., a "first" item) and/or a higher-numbered item (e.g., a "third" item).

As used herein, the terms "approximately" and "about" represent an amount close to the stated amount that still performs the desired function or achieves the desired result. For example, the terms "approximately" and "about" may refer to an amount that is within less than 10% of, within less than 5% of, within less than 1% of, within less than 0.1% of, or within less than 0.01% of the stated amount.

Some of the following examples have been described specifically in relation to well infrastructure relating to oil and gas production, or the like, but of course the systems and methods may be used with other well structures. Similarly, while in the following example an offshore well structure is described, nevertheless the same systems and methods may be used onshore, as will be appreciated.

Aspects of the present disclosure relate to an expansion apparatus which may be used in a wellbore. It should be understood that the drawings presented are not to scale, and may not reflect actual dimensions, ratios, angles, numbers of features or the like.

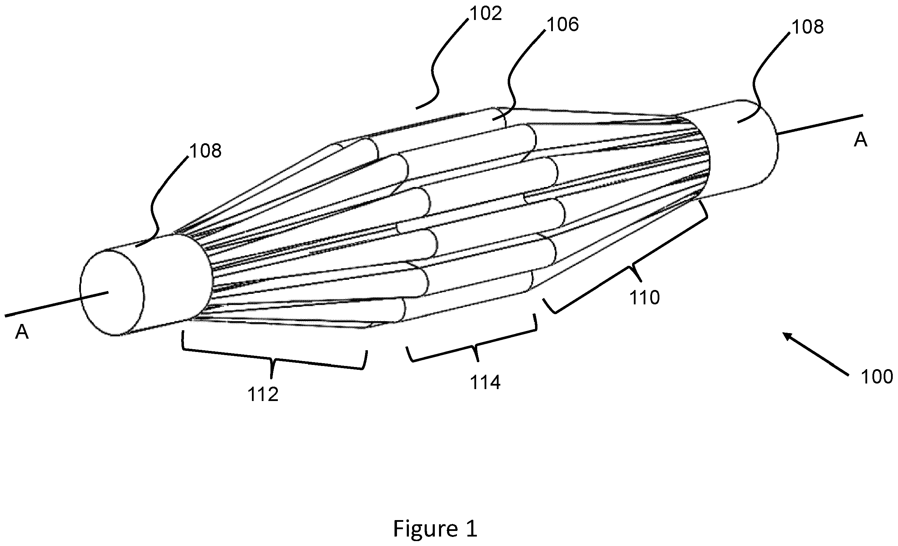

A perspective view of an expansion apparatus 100 is shown in Figure 1, in an initial non-expanded configuration. Although any use may be made of the apparatus 100, in the present example the expansion apparatus 100 is for use in a downhole environment to provide a seal. The expansion apparatus 100 comprises an expandable element 102 having a monolithic wall structure circumscribing a longitudinal axis A-A. The wall structure has an initial non-expanded profile as illustrated in Figure 1 in which a perimeter length of the wall structure is greater than an outer gauge perimeter of the wall structure.

The outer gauge perimeter is defined by the outer envelope of the wall structure. The outer envelope envelops, completely encloses or enfolds the wall structure as if with a covering.

The perimeter length of the wall structure is defined by tracing the outer surface of folds 106 which form the monolithic wall structure. In the non-expanded profile illustrated in Figure 1, the perimeter length is greater than the outer gauge diameter. As will be described in more detail bellow, the expansion apparatus 100 having a perimeter length which is greater than the outer gauge diameter is provided by additive manufacturing. In this respect, it should be understood that the term "fold" is used herein for convenience and simplicity in describing the geometry of the illustrated wall structure when in the initial non-expanded configuration, and is not intended to impart any limitation as to the method used to form this folded geometry. That is, the term "fold" is directed to the wall geometry, and not a folding forming process.

The folds 106 are distributed circumferentially and each fold 106 spans a length of the wall structure. As shown in Figure 1, the depth of the folds 106 increases through a first section 110 of the expansion apparatus to a third section 114, and increases through a second section 112 to the third section 114. The depth of the folds 106 remains constant in the third section 114. A shown in Figure 1, each individual fold spans the first, second and third sections 110, 112, 114, respectively. The outer gauge perimeter increases from one longitudinal end of the expandable element 102 through the first section 110 to the third section 114. The outer gauge perimeter remains constant through the third section 114. The outer gauge perimeter increases from the other longitudinal end of the expandable element 102 through the second section 112 to the third section 114.

The expansion apparatus 100 further comprises connectors 108 associated with each longitudinal end of the expansion apparatus 100. The connectors 108 are affixed to the ends of the expansion apparatus 100. While not shown in Figure 1, the connectors 108 are hollow allowing for fluid to be delivered into a space enclosed by the wall structure. The connectors 108 are configured to connect to other downhole elements such as a tubing, tool string, production string, running string, drill string, etc. One or both of the connectors 108 may be formed integrally with the wall structure, or alternatively may be separately formed and secured thereto.

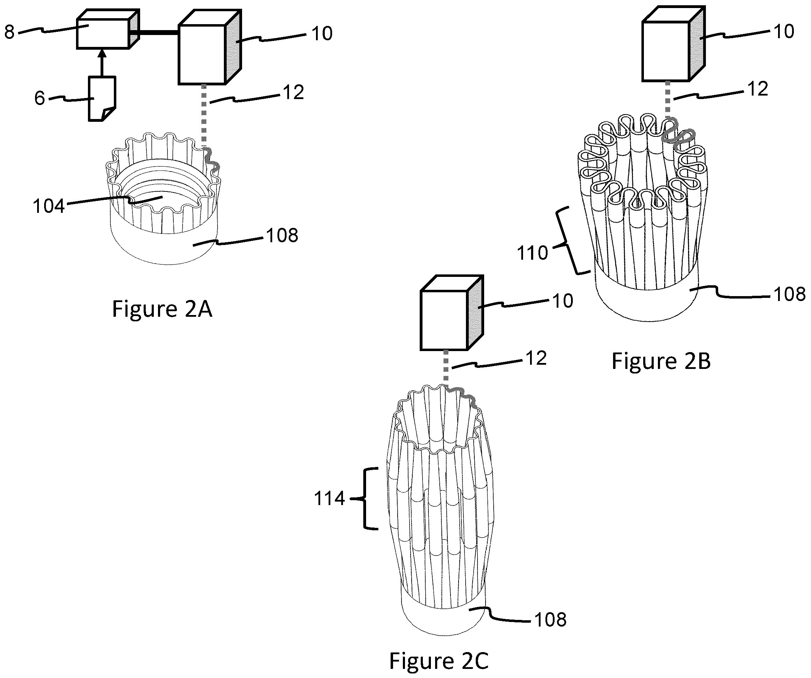

As noted above, the wall structure of the expandable element 106 is formed by additive manufacturing, which is sequentially exemplified in Figures 2A to 2C. As illustrated in Figure 2A, a processor 8 receives a design file or CAD file 6 of the expansion apparatus 100 to be manufactured by a print head 10 of an additive manufacturing printer. The print head 10 is communicatively connected to the processor 8. The processor 8 may include any suitable memory or storage device such as random-access memory (RAM), static RAM (SRAM), dynamic memory (DRAM), non-volatile RAM (NVRAM), read-only memory (ROM) or Flash memory useable to store one or more design files 6. The design file 6 may be physically stored in the memory of the processor 8. The design file 8 may be translated between different formats to generate computer readable instructions or code to operate the processor 8 to control the print head 10 such that the print head 10 manufactures, via additive manufacturing, the expansion apparatus 100 specified in the design file 8. While the processor 8 and design file 6 have been illustrated in Figure 2A, they are also present in Figures 2B and 2C, but have been omitted for clarity.

The print head 10 dispenses print material 12. Layers of the wall structure are added to directly form the initial non-expanded profile of the wall structure. The wall structure encloses a space 104 for receiving a pressurised fluid for use in inflating the expandable element 102 between a non-expanded configuration and an expanded configuration. The print head 10 initially forms the first section 110. The print head 10 dispenses print material such that the first section 110 has an increasing perimeter length and an increasing outer gauge perimeter. The print head 10 then forms the third section 114 as shown in Figure 2B which may have a different perimeter length and thickness than the first section 110. The print head 10 dispenses print material 12 to form the third section 114 having a constant perimeter length and a constant outer gauge perimeter. The print head 10 then forms the second section 112 as shown in Figure 2C which may have a different perimeter length and thickness than the first and third sections 110, 114. The print head 10 dispenses print material 12 to form the second section 112 having a decreasing perimeter length and a decreasing outer gauge perimeter. In the illustrated arrangement, the print head 10 dispenses print material 12 such that the perimeter length and outer gauge perimeter of second section 112 decrease at the same rate which the perimeter length and outer gauge perimeter of first section 110 increase at. The print head 10 may also form the connectors 108.

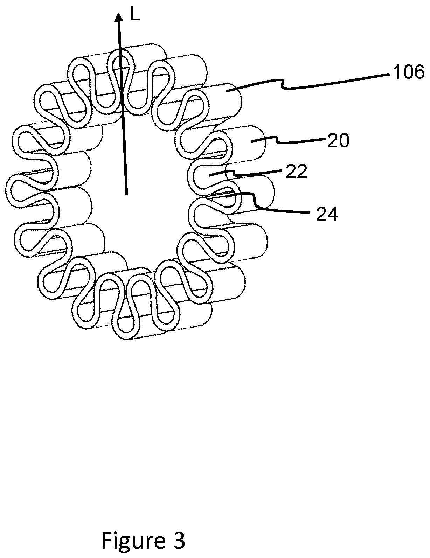

An axial segment of the expansion apparatus 100 is shown in Figure 3. In the illustrated arrangement, the folds 106 have a generally serpentine shape which span the circumference of the expansion element 102.

The folds 106 generally have a radially tortuous or serpentine path. Each fold 106 comprise an arcuate section with sections extending from either end of the arcuate section.

The folds 106 define peaks 20 with a trough 22 between adjacent peaks 20. Each peak 20 and each trough 22 is generally rounded. Each peak 20 has a generally tear drop shape such that each peak 20 defines a pocket 24. The sidewalls of the wall structure of a peak 20 define the pocket 24. The sidewalls of the peak 20 are almost in contact to define the pocket 24. One or more of the pockets 24 may expand upon inflation of the expandable element 102. Altering the shape, dimension and configuration of one or more of the peaks 20, trough 24 and pockets 24 may alter the inflation profile of the expansion apparatus.

Manufacturing the wall structure of the expandable element 102 allows for the folds 106 to have a complex geometries that enable a greater ratio of the perimeter length to the outer gauge perimeter than possible with apparatus manufactured by conventional subtractive manufacturing techniques. Folds 106 with complex geometries, such as the folds 106 illustrated in Figure 3, allow for a greater perimeter length to be provided in a a particular outer gauge perimeter than is possible with conventional subtractive manufacturing techniques. More folds 106 and/or a greater perimeter length are accordingly packaged in the outer gauge perimeter in the non-expanded configuration such that a greater expansion ratio is achieved upon inflation of the expandable element 102.

In the illustrated arrangement, a sidewall of the peaks 20 and troughs 22 has a constant thickness. Furthermore, the sidewalls of the peaks 20 and troughs 22 are coplanar. One of skill in the art will appreciate, that this may be varied depending on the application and environment of use of the expansion apparatus 100.

In the illustrated arrangement, each peak 20 is centred about a radial line of the expandable element 102. Accordingly, a radial line extending from the radial centre of the expandable element 102 bisects each peak 20 and trough 22. An exemplary radial line is indicated as L in Figure 3. While each of the folds 106 has been illustrated as having a similar profile or configuration, each fold 106 may have a different profile or configuration. The configuration or profile of the folds 106 may vary around the circumference of the wall structure.

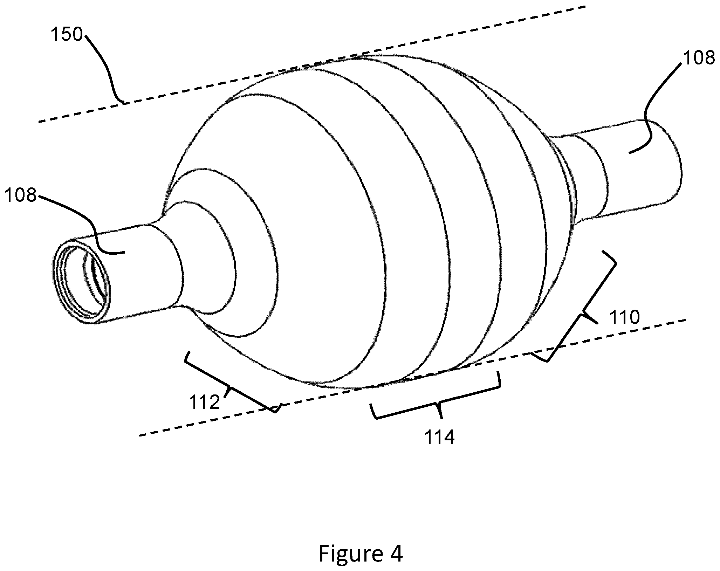

The expansion apparatus 100 is illustrated in an expanded configuration in Figure 4. The expandable element 102 has been inflated by fluid pressure and the initial non-expanded profile has been reformed to increase the outer gauge perimeter. The expansion apparatus 100 is located within a structure 150. Exemplary structures include wellbore casing, tubing and piping. While an outer surface of the expandable apparatus 102 has been shown without folds 106, one of skill in the art will appreciate that folds 106 may still be present in the expansion apparatus 100 after inflation. The expansion apparatus 100 may be configured such that a portion of the outer surface is in contact with a portion of the structure upon inflation of the expandable element 102.

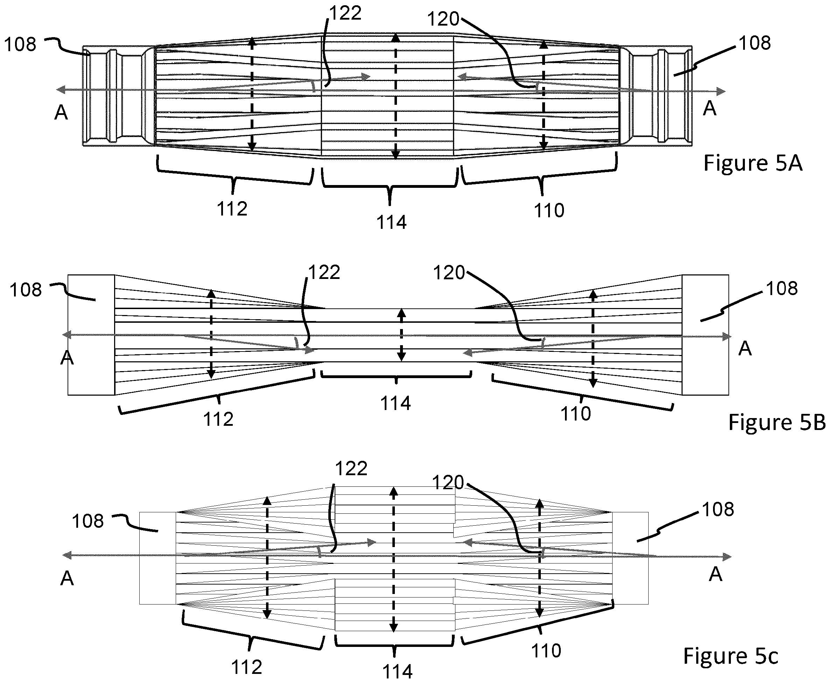

As best shown in Figure 5A, the inner gauge perimeter is non-constant through the longitudinal axis A-A of the expansion apparatus 100. The inner gauge perimeter decreases from one longitudinal end of the expandable element 102 through the first section 110. The inner gauge perimeter decrease from the other longitudinal end of the expandable element 102 through the second section 112. The inner gauge perimeter remains constant through the third section 114.

As further shown in Figure 5A, the wall structure of the expandable element 102 has a first flank angle 120 and a second flank angle 122. The first flank angle 120 is formed between a first axial location at one longitudinal end of the expansion apparatus 100 proximate the first section 110 and the longitudinal axis A-A. The second flank angle 122 is formed between a second axial location at the other longitudinal end of the expansion apparatus 100 proximate the second section 122 and the longitudinal axis A-A. The flank angles 120, 122 are equal. In this exemplary expansion apparatus 100, the flank angles 120, 122 are greater than zero.

As shown in Figure 5A, the connectors 108 are configured for connection to other downhole elements. While not shown, the connectors 108 may have inner or outer threads for connection.

The outer gauge perimeter indicated by dashed lines in Figure 5A, respectively, increases through the first and second sections 110, 112, respectively. In particular, the outer gauge perimeter increases through the first section 110 to the third section 114. Similarly, the outer gauge perimeter increases through the second section 112 to the third section 114. The outer gauge perimeter may say constant in the third section 114. Expansion during inflation of the expandable element is achieved by reforming the initial non-expanded profile of the wall structure to increase the outer gauge perimeter.

Other forms of the expansion apparatus 100 are shown in Figures 5B and 5C. As shown in Figures 5A and 5B, the flank angle 120, 122 may be varied resulting in different profiles for the expandable element 102. The flank angle 120, 122 may be less than zero as illustrated in Figure 5B. Also, as illustrated in Figure 5B, the outer gauge perimeter may decrease through the first section 110, stay constant in the third second 114 and increase through the second section 112 when moving longitudinally along the expansion element.

As illustrated in Figure 5C, the outer gauge perimeter may vary between the sections 110, 114, 112, and the thickness of the folds 106 of the wall structure may vary through the sections 110, 114, 112. In the first section 110, the thickness of the wall structure increases such that an inner gauge perimeter of the first section 110 decreases while the outer gauge perimeter increases moving in the longitudinal direction. The inner gauge perimeter may be defined by an inner envelope of the wall structure. The inner and outer gauge perimeters may remain constant through the third section 114 of the wall structure. The inner gauge perimeter may increase while the outer gauge perimeter may decrease through the second section 112. While only certain alternatives of the expansion apparatus 100 have been illustrated, one of skill in the art will appreciate that various inner and outer gauge perimeters are possible by varying wall structure thickness and flank angles of the sections 110, 114, 112.

In the expansion apparatus 100 depicted in Figures 1 to 4, the thickness and the outer gauge perimeter of the wall structure of the expandable element 102 is non-constant or non-uniform. However, the skilled reader will appreciate that other configurations are possible.

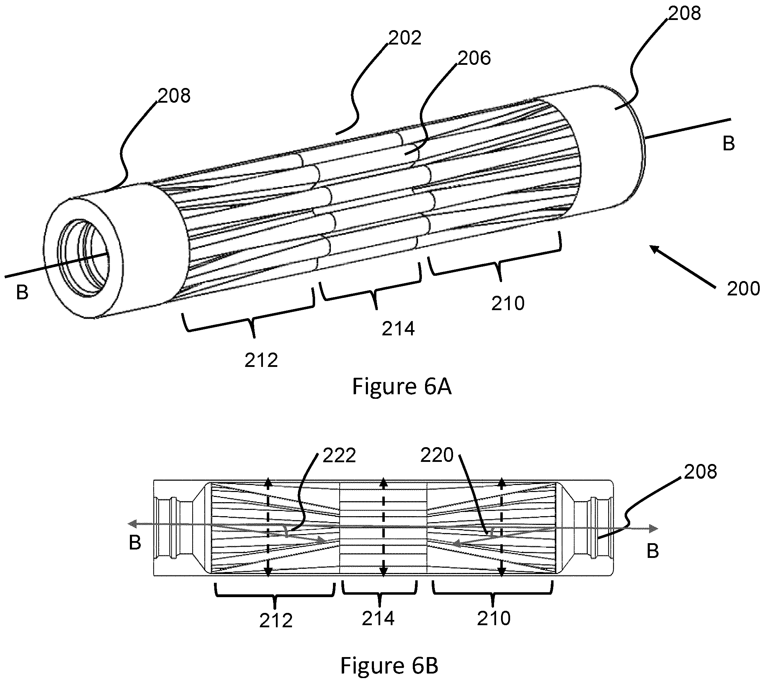

An expansion apparatus 200 is shown in Figures 6A and 6B. The expansion apparatus 200 is similar to the described expansion apparatus 100 shown in Figure 1 to 5 and as such like elements are referred to with the same reference numerals, incremented by 100. The expansion apparatus 200 comprises an expandable element 202 having a monolithic wall structure circumscribing a longitudinal axis B-B.

In contrast with the expansion apparatus 100, the outer gauge perimeter indicated by dashed lines in Figure 6B of wall structure remains constant through the sections 210, 212, 214. The expansion apparatus 200 may be particularly suitable for run through applications where a constant outer diameter allows the expansion apparatus 200 to pass through tight or narrow downhole restricted areas within a wellbore.

While the outer gauge perimeter remains constant, the inner gauge perimeter does not. The Inner gauge diameter decreases from one longitudinal end of the expandable element 202 through the first section 210 to the third section 214. The inner gauge perimeter decreases from the other longitudinal end of the expandable element 202 through the second section 212 to the third section 214. The inner gauge perimeter remains constant or uniform through the third section 214.

As illustrated in Figure 6B, the wall structure of the expandable element 202 has a first flank angle 220 and a second flank angle 222. The first flank angle 220 is formed between a first axial location at one longitudinal end of the expansion apparatus 200 proximate the first section 210 and the longitudinal axis B-B. The second flank angle 222 is formed between a second axial location at the other longitudinal end of the expansion apparatus 200 proximate the second section 222 and the longitudinal axis B-B. The flank angles 220, 222 are equal. In this exemplary expansion apparatus 200, the flank angles 220, 222 are less than zero, i.e. negative angles relative to the longitudinal axis B-B.

Expansion during inflation of the expandable element 202 is achieved by reforming the initial non-expanded profile of the wall structure to increase the outer gauge perimeter.

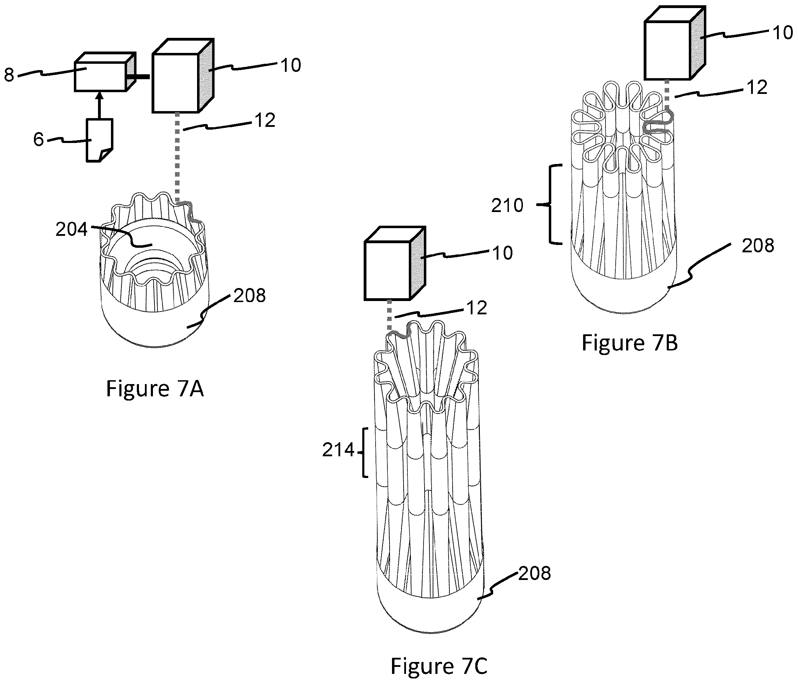

As shown in Figures 7A to 7C, the expansion apparatus 200 is formed by additive manufacturing, which is sequentially exemplified in Figures 7A to 7C. As illustrated in Figure 7A, a processor 8 receives a design file or CAD file 6 of the expansion apparatus 200 to be manufactured by a print head 10 of an additive manufacturing printer. The print head 10 is communicatively connected to the processor 8. The processor 8 may include any suitable memory or storage device such as random-access memory (RAM), static RAM (SRAM), dynamic memory (DRAM), non-volatile RAM (NVRAM), read-only memory (ROM) or Flash memory useable to store one or more design files 6. The design file 6 may be physically stored in the memory of the processor 8. The design file 8 may be translated between different formats to generate computer readable instructions or code to operate the processor 8 to control the print head 10 such that the print head 10 manufactures, via additive manufacturing, the expansion apparatus 200 specified in the design file 8. While the processor 8 and design file 6 have been illustrated in Figure 7A, they are also present in Figures 7B and 7C, but have been omitted for clarity.

The print head 10 dispenses print material 12. Layers of the wall structure are added to directly form the initial non-expanded profile of the wall structure. The wall structure encloses a space 204 for receiving a pressurised fluid for use in inflating the expandable element 202 between a non-expanded configuration and an expanded configuration. The print head 10 initially forms the first section 210. The print head 10 dispenses print material such that the first section 210 has an increasing perimeter length, a constant outer gauge perimeter and a decreasing inner gauge perimeter. The print head 10 then forms the third section 214 as shown in Figure 7B which may have a different perimeter length and thickness than the first section 210. The print head 10 dispenses print material 12 to form the third section 214 having a constant perimeter length, a constant outer gauge perimeter and a constant inner gauge perimeter. The print head 10 then forms the second section 212 as shown in Figure 7C which may have a different perimeter length and thickness than the first and third sections 210, 214. The print head 10 dispenses print material 12 to form the second section 212 having a decreasing perimeter length, a constant outer gauge perimeter and an increasing inner gauge perimeter. In the illustrated arrangement, the print head 10 dispenses print material 12 such that the inner gauge perimeter of second section 212 increases at the same rate which the inner gauge perimeter of first section 210 decreases at. The print head 10 may also form the connectors 208.

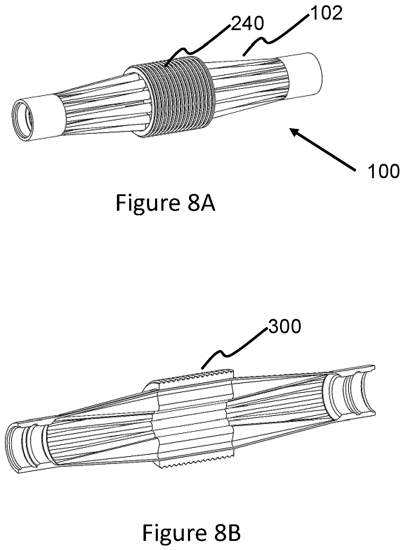

The described expansion apparatus may be used create a seal with a surface. As shown in Figures 8A and 8B, a sleeve 240 may surround the expansion apparatus 100. The sleeve 240 may be used to create a seal with a surface. In particular, upon inflation of the expansion apparatus from the non-expanded configuration to the expanded configuration, the sleeve may contact a surface to create a seal. While the sleeve 240 has been shown with the expansion apparatus 100, the skilled reader will appreciate that the sleeve 240 may be used with any of the expansion apparatus described herein. In the illustrated arrangement, the sleeve 240 is an elastomer. The described sleeve 204 could be used with any of the expansion apparatus described herein.

The sleeve 240 is generally positioned to surround the third section 114 of the expandable element 102. In this example, the sleeve 240 has a ribbed outer surface configured to provide a seal with an outer surface upon expansion through inflation of the expandable element 102.

While a sleeve 240 has been described, one of skill in the art will appreciate that other configurations are possible. The sleeve 240 may be used in addition to or as alternative to a coating, layer, shroud or similar. Furthermore, no sleeve 240 may be used.

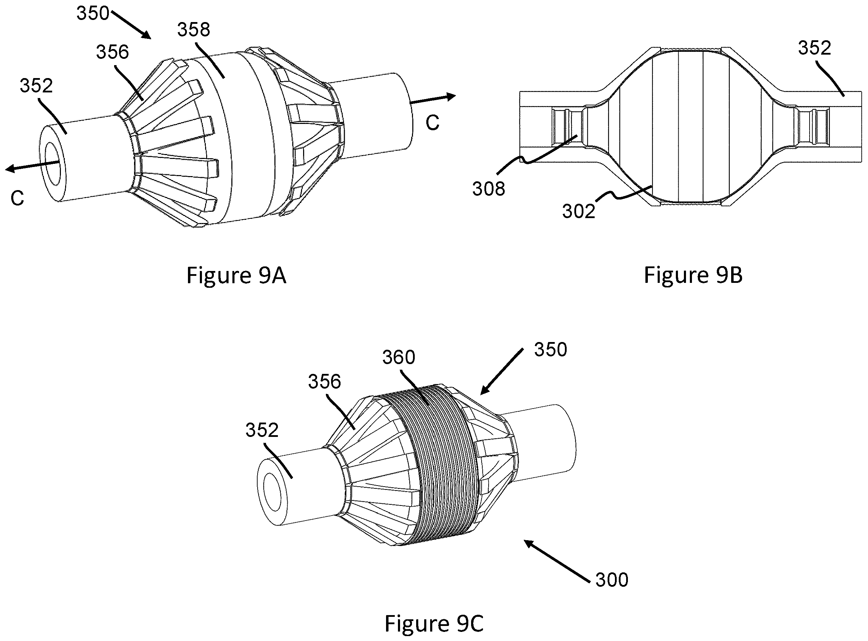

Turning now to Figures 9A to 9C, an expansion apparatus 300 is illustrated in the expanded configuration. The expansion apparatus 300 is similar to the described expansion apparatus 100 shown in Figures 1 to 4 and as such like elements are referred to with the same reference numerals, incremented by 200. The expansion apparatus 300 comprises an expandable element 302 having a monolithic wall structure circumscribing a longitudinal axis C-C. The expansion apparatus 300 further comprises base collar 352 and anti-extrusion arrangement 350. The base collar 352 is affixed to an end of the expandable element 302. The base collar 352 may allow fluid pressure, e.g. fluid flowing to the volume defined by the expandable element, to expand the expandable to the expanded configuration.

The anti-extrusion arrangement 350 is configured to provide a support function to minimise extrusion of the expansion apparatus 300. In the illustrated arrangement, the anti-extrusion arrangement 350 comprises petals or fingers 356 overlaying an inflatable component 358. The fingers 356 are configured to provide axial rigidity to the expansion apparatus 300. In the initial non-expanded configuration of the expandable element 302, the fingers 356 overlay the element 302 such that fingers 356 abut or are proximate each other. The fingers 356 may be interlocked in the non-expanded configuration. In the non-expanded configuration, the envelope defined by the fingers 356 is generally the same as the outer gauge perimeter of the expansion apparatus 300. As the element transitions to the expanded configuration, the fingers 356 separate as the expandable element 302 inflates or expands the inflatable component 358. In the expanded configuration, the fingers 356 and/or inflatable component 358 may assist in providing the support function. As illustrated in Figure 9C, a sleeve may be positioned over the inflatable component 358 between the fingers 356 of the anti-extrusion arrangement 350. The sleeve 360 may assist in providing the support function.

While the folds 306 are depicted as being fully inflated in the expanded configuration illustrated in Figures 9A to 9C, residual folds may remain after inflation. Residual folds may be defined as folds which following inflation, still have some portion of the original fold remaining. Residual folds therefore still have a trough and a peak; however, the distance between the peak and trough may be reduced compared with the pre-inflation configuration of the fold. Additionally or alternatively, one or more folds, residual or otherwise, may be radially compressed after inflation upon contact with a surface such that one or more folds are no longer present.

In use, the expandable element 302 of the expansion apparatus 300 is at least partially inflated by fluid pressure. Expansion of the element 302 and/or apparatus 300 may inflate the inflatable component 358 and urge fingers 356 apart . The component 357, sleeve 360 or fingers 356 may contact an surface such as casing, tubing or piping of a wellbore, and provide a support function. In the illustrated expanded configuration, the expandable element 302 has a shape of a prolate spheroid in the expanded configuration.

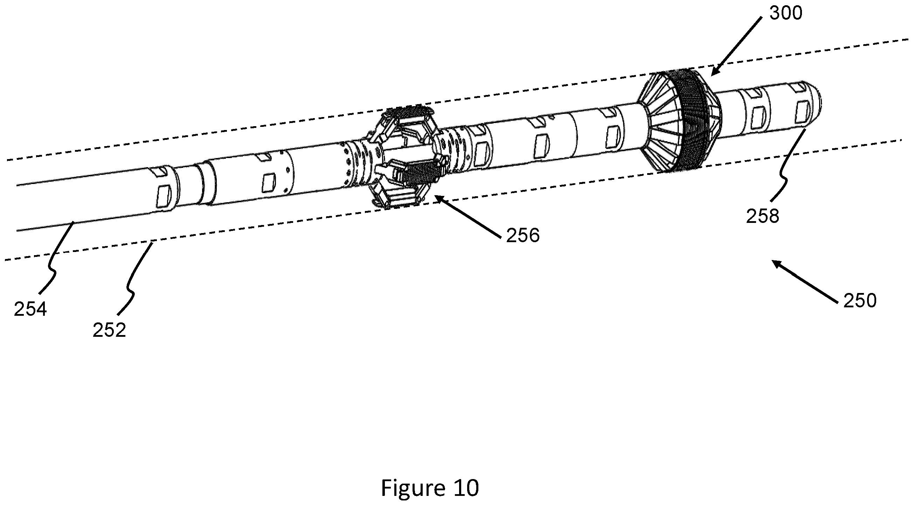

The described expansion apparatus may be used in a variety of applications. For example, the expansion apparatus may be incorporated into a tool string 250 as illustrated in Figure 10. The tool string 250 is positioned within a wellbore 252. The wellbore 252 may be lined with casing, tubing and/or piping, or may be an open hole wellbore. The tool string 250 may be configured to be permanently or temporarily positioned within the wellbore 252. The tool string 250 comprises a body 254 connected to mechanical slips 256, the expansion apparatus 300 and an end element 258. While the expansion apparatus 300 is illustrated in Figure 10, any of the described expansion apparatus may be incorporated into the tool string 250.

The body 254 is generally cylindrical. The mechanical slips 256 are illustrated in the actuated position. The slips 356 are actuated by an applied axial setting force. The slips 356 may permanently or temporarily secure the tool string 250 in the wellbore 252. After actuation of the mechanical slips 256, the expansion apparatus 300 and/or element 302 may transition from the initial non-expanded configuration to the expanded configuration. The expansion apparatus 300 may provide a support function to minimise extrusion of the tool string 250. After expansion of the apparatus 300 and/or element 302, the mechanical slips 256 may return to a non-actuated position. The described tool string 250 may relate to a bridge plug apparatus. The tool string 250 may comprise additional elements such as valves, gauges, batteries, communication modules, cable, slicklines, e-lines, etc.

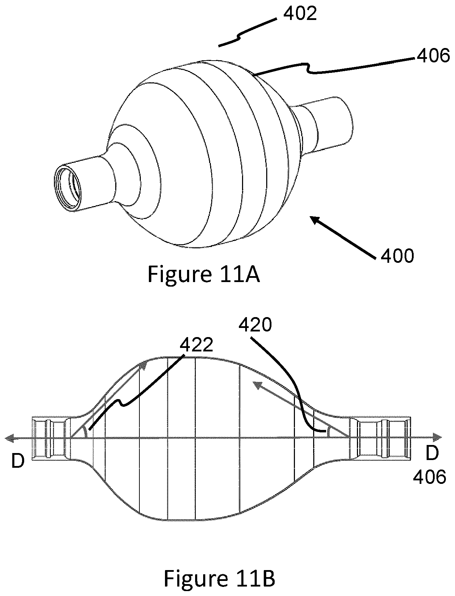

Turning now to Figures 11A and 11B, an expansion apparatus 400 is shown. The expansion apparatus 400 is similar to the described expansion apparatus 100 shown in Figure 1 to 4 and as such like elements are referred to with the same reference numerals, incremented by 300.

The expansion apparatus 400 is shown in the expanded configuration. As with the expansion apparatus 300 shown in Figures 10A to 10D, the folds 406 are fully inflated such that no or few residual folds are present, and the expandable element 402 has a shape of a prolate spheroid. As illustrated in Figure 11B, the first and second flank angles 420 and 422, respectively, are not equal. The first flank angle 420 determined relative to the longitudinal axis D-D is less than the second flank angle 422. While this difference in flank angles is depicted in the expanded configuration, the skilled reader will appreciate that such a difference may similarly be present in the non-expanded configuration.

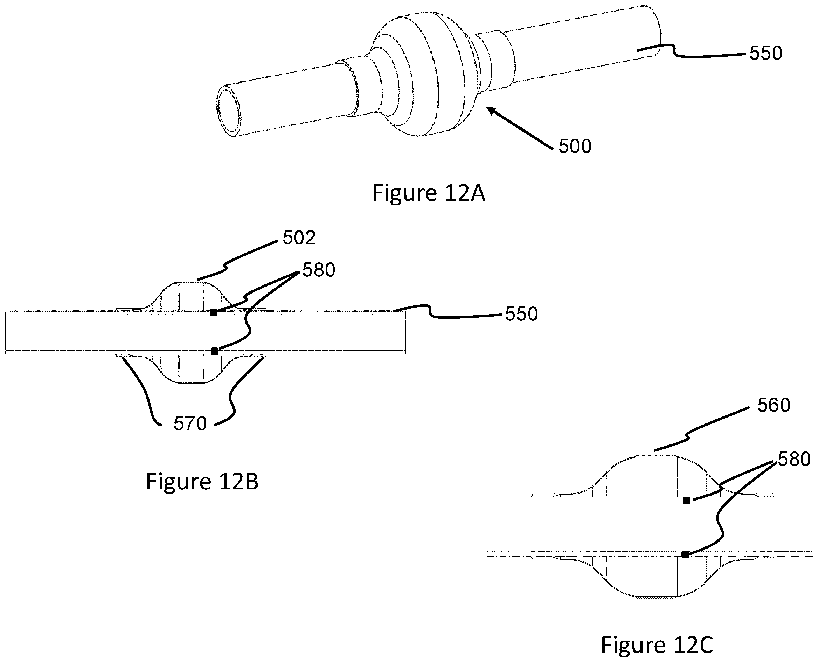

Figures 12A to 12C depict an expansion apparatus 500. The expansion apparatus 500 is similar to the described expansion apparatus 100 shown in Figure 1 to 4 and as such like elements are referred to with the same reference numerals, incremented by 400. The expansion apparatus 500 surrounds tubing 550. The tubing 550 passes through the space encloses by the wall structure of the expandable element 502. The expansion apparatus 500 is sized such that the wall structure surrounds the tubing 550. The tubing 500 is sealed within the expansion apparatus 500 by seals 570. The seals 560 are positioned on either longitudinal end of the expansion apparatus 500 to seal the tubing 550 relative to the expansion apparatus 500. The tubing 550 may take the form of a pipe, or bladder entirely or partially internal to the wall structure. As shown in Figure 12C, an anchor560 may surround the expansion apparatus 500. The anchor 560 function to anchor or secure the expansion apparatus to a surrounding surface.

The tubing 550 further comprises ports 580. The ports 580 are located within an wall of the tubing 550. The ports 580 are configured to allow for inflation of the expandable element 502. The ports 580 allow for fluid within the tubing 550 to flow into the expansion apparatus 500 and inflate the expansion apparatus 500. The ports 580 may be controlled to open to allow expansion by inflation of the wall structure. The ports 580 may be controlled via a communication signal. While multiple ports 580 have been illustrated, a single port 580 may be used.

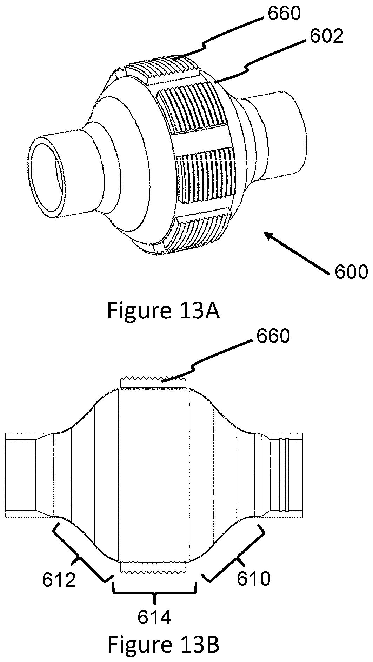

Figures 13A to 13B shown an expansion apparatus 600. The expansion apparatus 600 is similar to the described expansion apparatus 100 shown in Figure 1 to 4 and as such like elements are referred to with the same reference numerals, incremented by 500. Slip 660 surround the third section 614 of the expandable element 602. The slip 660 are configured to anchor the expansion apparatus 600 to a surface, for example against the inner surface of a wellbore. The slips 660 is made of material suitable for securing the expansion apparatus to the surface. The slip 660 is configured to grip the expansion apparatus 600 without damaging the expansion apparatus. The slip 660 forms a near circle around the expansion apparatus 600. An exemplary slip 660 comprises three or more steel wedges that are hinged together, forming a near circle around the expansion apparatus 600. Expansion of the element 602 as illustrated in Figures 13A and 13B may assist in securing the expansion apparatus 600 to a surface via the slips 660.

In use, the described expansion apparatus may be located in a wellbore and then inflated to provide a seal. The described anchor 560 or slips 660 may assist with locating the expansion apparatus within a wellbore.

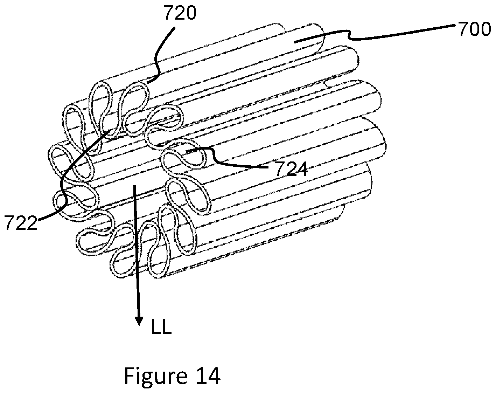

While particular folds 106 have been described and illustrated, one of skill in the art will appreciate that other configurations are possible. As shown in Figure 14, folds 700 of the described expansion apparatus may have a canted profile.

The folds 700 generally have a radially tortuous or serpentine path. Each fold 106 comprise an arcuate section with sections extending from either end of the arcuate section. However, in the illustrated arrangement, the folds 700 have a profile that is deviated from a radial line extending from the expandable element.

The folds 106 define peaks 720 with a trough 722 between adjacent peaks 720. Each peak 720 and each trough 722 is generally rounded. Each peak 720 defines a pocket 724. The sidewalls of the wall structure of a peak 720 define the pocket 724.

In the illustrated arrangement, a sidewall of the peaks 720 and troughs 722 has a constant thickness. Furthermore, the sidewalls of the peaks 720 and troughs 722 are coplanar. One of skill in the art will appreciate, that this may be varied depending on the application and environment of use of the expansion apparatus.

Thus, in contrast with the arrangement illustrated in Figure 2, each peak 720 is not centred about a radial line (indicated as LL in Figure 14) of the expandable element 102. In the illustrated arrangement, each peak 720 is angled with respect to a radial line extending from the radial centre of the expandable element. In the illustrated arrangement, each peak 720 is angled in the clockwise direction, although one of skill in the art will appreciated each peak 720 may be angled in the counter clockwise direction instead. Accordingly, while each peak 720 defines a pocket 724, each pocket 720 has a similarly angled tear drop shape.

One or more of the pockets 724 may expand upon inflation of the expandable element 102. Altering the shape, dimension and configuration of one or more of the peaks 720, trough 724 and pockets 724 may alter the inflation profile of the expansion apparatus.

It should be understood that the examples provided are merely exemplary of the present disclosure, and that various modifications may be made thereto.

## Claims

1. A downhole expansion apparatus (100, 300) comprising:
an expandable element (102) having a monolithic wall structure circumscribing a longitudinal axis (A-A) and enclosing a space for receiving a pressurised fluid for use in inflating the expandable element (102) between a non-expanded configuration and an expanded configuration;
the wall structure being formed by additive manufacturing to have an initial non-expanded profile in which a perimeter length of the wall structure is greater than an outer gauge perimeter of the wall structure, the outer gauge perimeter defined by an outer envelope of the wall structure,
wherein expansion during inflation is achieved by reforming the initial non-expanded profile of the wall structure to increase the outer gauge perimeter.

2. The expansion apparatus (100, 300) of claim 1, wherein the perimeter length of the wall structure varies along the longitudinal axis (A-A).

3. The expansion apparatus (100, 300) of claim 1 or 2, wherein the wall structure comprises:
a first perimeter length at a first axial location;
a second perimeter length at a second axial location; and
a third perimeter length at a third axial location which is intermediate the first and second axial locations, and optionally wherein the third perimeter length is greater than the first and second perimeter lengths.

4. The expansion apparatus (100, 300) of claim 3, wherein:
a first flank angle is formed between the longitudinal axis (A-A) and a line connecting the first axial location and the third axial location,
a second flank angle is formed between the longitudinal axis (A-A) and a line connecting the second axial location and the third axial location, and
the first and second flank angles are equal.

5. The expansion apparatus (100, 300) of any one of claims 1 to 4, wherein an inner perimeter length of the wall structure varies along the longitudinal axis (A-A).

6. The expansion apparatus (100, 300) of any one of claims 1 to 5, wherein the wall structure comprises:
a first inner perimeter length at a first axial location;
a second inner perimeter length at a second axial location; and
a third inner perimeter length at a third axial location which is intermediate the first and second axial locations, and optionally wherein the third inner perimeter length is greater than the first and second inner perimeter lengths.

7. The expansion apparatus (100, 300) of any one of claims 1 to 6, wherein the wall structure comprises:
a first section (110);
a second section (112); and
a third section (114), the third section (114) being longitudinally intermediate the first and second sections (110, 112), and optionally wherein the wall structure has a greater thickness at a transition area between the first and third sections (110, 114) and/or between the third and second sections (114, 112).

8. The expansion apparatus (100, 300) of claim 7, wherein the outer gauge perimeter increases or decreases through the first and/or second sections (110, 112), and/or wherein the outer gauge perimeter remains constant through the third section (114), and/or wherein at least one of: the expandable element (102) is hollow, the expansion apparatus (100, 300) is longitudinally asymmetric, and the expandable element (102) is substantially inelastic.

9. The expansion apparatus (100, 300) of any one of claims 1 to 8, wherein the wall structure comprises folds (106), and optionally at least one of:
the folds (106) are circumferentially distributed,
the folds (106) define a generally serpentine cross-section in a circumferential direction,
the folds (106) extend longitudinally,
each fold (106) has an associated depth and the fold depth varies along the longitudinal axis (A-A) of the wall structure, and
each fold (106) has a generally arcuate section with axially extending sections extending from end thereof.

10. The expansion apparatus (100, 300) of any one of claims 1 to 9, further comprising a layer surrounding the wall structure, the layer configured to create a seal in the expanded configuration, and optionally wherein the layer comprises a coating, cover, sleeve or shroud.

11. A computer program comprising computer executable instructions that, when executed by a processor (8), cause the processor (8) to control an additive manufacturing apparatus to manufacture the expansion apparatus (100, 300) of any one of claims 1 to 10.

12. A method of manufacturing an expansion apparatus (100, 300) via additive manufacturing, the method comprising:
obtaining an electronic file representing a geometry of the expansion apparatus (100) of any one of claims 1 to 10; and
controlling an additive manufacturing apparatus to manufacture, over one or more additive manufacturing steps, the expansion apparatus (100, 300) according to the geometry specified in the electronic file.

13. A method of providing a seal, the method comprising:
locating the expansion apparatus (100, 300) of any one of claims 1 to 10 in a wellbore; and
inflating the expansion apparatus (100, 300) in the wellbore to provide a seal, and optionally at least one of:
wherein inflating further comprises increasing the outer gauge perimeter of the wall structure of the expansion apparatus (100, 300),
wherein inflating further comprises providing a seal with a surface of the expansion apparatus (100, 300), and
wherein inflating further comprises providing a seal with a sleeve (240) surrounding the expansion apparatus (100, 300).

14. A method of manufacturing a downhole expansion apparatus (100, 300), the method comprising:
forming, by additive manufacturing, an expansion apparatus (100, 300) comprising an expandable element (102) having a monolithic wall structure circumscribing a longitudinal axis (A-A) and enclosing a space for receiving a pressurised fluid for use in inflating the expandable element (102) between a non-expanded configuration and an expanded configuration, the wall structure having an initial non-expanded profile in which a perimeter length of the wall structure is greater than an outer gauge perimeter of the wall structure, the outer gauge perimeter defined by an outer envelope of the wall structure,
wherein the initial non-expanded profile is reformable by inflation to increase the outer gauge perimeter.

15. The method of claim 14, wherein forming the expansion apparatus (100, 300) comprises forming the expansion apparatus (100, 300) based on one or more parameters of a well; and/or the method further comprises:
collecting the one or more parameter of the well.

## Patentansprüche

1. Vorrichtung zur Untertage-Aufweitung (100, 300), umfassend:
ein aufweitbares Element (102), das eine monolithische Wandstruktur aufweist, die eine Längsachse (A-A) umschreibt und einen Raum zum Aufnehmen eines unter Druck stehenden Fluids zur Verwendung beim Aufpumpen des aufweitbaren Elements (102) zwischen einer nicht aufgeweiteten Konfiguration und einer aufgeweiteten Konfiguration umschließt;
wobei die Wandstruktur durch additive Fertigung so ausgebildet wird, dass sie ein anfängliches nicht aufgeweitetes Profil aufweist, bei dem eine Umfangslänge der Wandstruktur größer ist als ein äußerer Begrenzungslinienumfang der Wandstruktur, wobei der äußere Begrenzungslinienumfang durch eine äußere Hüllkurve der Wandstruktur definiert ist,
wobei die Aufweitung während des Aufpumpens durch Umformen des anfänglichen nicht aufgeweiteten Profils der Wandstruktur, um den äußeren Begrenzungslinienumfang zu vergrößern, erzielt wird.

2. Vorrichtung zur Aufweitung (100, 300) nach Anspruch 1, wobei die Umfangslänge der Wandstruktur entlang der Längsachse (A-A) variiert.

3. Vorrichtung zur Aufweitung (100, 300) nach Anspruch 1 oder 2, wobei die Wandstruktur Folgendes umfasst:
eine erste Umfangslänge an einem ersten axialen Ort;
eine zweite Umfangslänge an einem zweiten axialen Ort; und
eine dritte Umfangslänge an einem dritten axialen Ort, der zwischen dem ersten und dem zweiten axialen Ort liegt, und wobei optional die dritte Umfangslänge größer ist als die erste und die zweite Umfangslänge.

4. Vorrichtung zur Aufweitung (100, 300) nach Anspruch 3, wobei:
ein erster Flankenwinkel zwischen der Längsachse (A-A) und einer Linie ausgebildet ist, die den ersten axialen Ort und den dritten axialen Ort verbindet,
ein zweiter Flankenwinkel zwischen der Längsachse (A-A) und einer Linie ausgebildet ist, die den zweiten axialen Ort und den dritten axialen Ort verbindet, und
der erste und der zweite Flankenwinkel gleich sind.

5. Vorrichtung zur Aufweitung (100, 300) nach einem der Ansprüche 1 bis 4, wobei eine innere Umfangslänge der Wandstruktur entlang der Längsachse (A-A) variiert.

6. Vorrichtung zur Aufweitung (100, 300) nach einem der Ansprüche 1 bis 5, wobei die Wandstruktur Folgendes umfasst:
eine erste innere Umfangslänge an einem ersten axialen Ort;
eine zweite innere Umfangslänge an einem zweiten axialen Ort; und
eine dritte innere Umfangslänge an einem dritten axialen Ort, der zwischen dem ersten und dem zweiten axialen Ort liegt, und wobei optional die dritte innere Umfangslänge größer ist als die erste und die zweite innere Umfangslänge.

7. Vorrichtung zur Aufweitung (100, 300) nach einem der Ansprüche 1 bis 6, wobei die Wandstruktur Folgendes umfasst:
einen ersten Abschnitt (110);
einen zweiten Abschnitt (112); und
einen dritten Abschnitt (114), wobei der dritte Abschnitt (114) in Längsrichtung zwischen dem ersten und dem zweiten Abschnitt (110, 112) liegt, und wobei optional die Wandstruktur an einem Übergangsbereich zwischen dem ersten und dem dritten Abschnitt (110, 114) und/oder zwischen dem dritten und dem zweiten Abschnitt (114, 112) eine größere Dicke aufweist.

8. Vorrichtung zur Aufweitung (100, 300) nach Anspruch 7, wobei der äußere Begrenzungslinienumfang durch den ersten und/oder zweiten Abschnitt (110, 112) zunimmt oder abnimmt, und/oder wobei der äußere Begrenzungslinienumfang durch den dritten Abschnitt (114) konstant bleibt, und/oder wobei mindestens eines von Folgendem gilt: das aufweitbare Element (102) ist hohl, die Vorrichtung zur Aufweitung (100, 300) ist in Längsrichtung asymmetrisch und das aufweitbare Element (102) ist im Wesentlichen unelastisch.

9. Vorrichtung zur Aufweitung (100, 300) nach einem der Ansprüche 1 bis 8, wobei die Wandstruktur Falten (106) umfasst und optional mindestens eines von Folgendem gilt:
die Falten (106) sind in Umfangsrichtung verteilt,
die Falten (106) definieren einen im Allgemeinen schlangenförmigen Querschnitt in Umfangsrichtung,
die Falten (106) erstrecken sich in Längsrichtung,
jede Falte (106) hat eine zugehörige Tiefe und die Faltentiefe variiert entlang der Längsachse (A-A) der Wandstruktur, und
jede Falte (106) hat einen im Allgemeinen bogenförmigen Abschnitt mit sich axial erstreckenden Abschnitten, die sich von einem Ende derselben erstrecken.

10. Vorrichtung zur Aufweitung (100, 300) nach einem der Ansprüche 1 bis 9, ferner eine Schicht umfassend, welche die Wandstruktur umgibt, wobei die Schicht dafür konfiguriert ist, in der aufgeweiteten Konfiguration eine Dichtung zu erzeugen, und wobei optional die Schicht eine Beschichtung, eine Hülle, eine Hülse oder eine Ummantelung umfasst.

11. Computerprogramm, umfassend computerausführbare Anweisungen, die, wenn sie durch einen Prozessor (8) ausgeführt werden, bewirken, dass der Prozessor (8) eine Vorrichtung zur additiven Fertigung steuert, um die Vorrichtung zur Aufweitung (100, 300) nach einem der Ansprüche 1 bis 10 herzustellen.

12. Verfahren zur Herstellung einer Vorrichtung zur Aufweitung (100, 300) mittels additiver Fertigung, wobei das Verfahren Folgendes umfasst:
Erlangen einer elektronischen Datei, die eine Geometrie der Vorrichtung zur Aufweitung (100) nach einem der Ansprüche 1 bis 10 darstellt; und
Steuern einer Vorrichtung zur additiven Fertigung, um über einen oder mehrere additive Fertigungsschritte die Vorrichtung zur Aufweitung (100, 300) gemäß der in der elektronischen Datei vorgegebenen Geometrie herzustellen.

13. Verfahren zum Bereitstellen einer Dichtung, wobei das Verfahren Folgendes umfasst:
Anordnen der Vorrichtung zur Aufweitung (100, 300) nach einem der Ansprüche von 1 bis 10 in einem Bohrloch; und
Aufpumpen der Vorrichtung zur Aufweitung (100, 300) im Bohrloch, um eine Dichtung bereitzustellen, und optional mindestens eines von Folgendem:
wobei das Aufpumpen ferner das Vergrößern des äußeren Begrenzungslinienumfangs der Wandstruktur der Vorrichtung zur Aufweitung (100, 300) umfasst,
wobei das Aufpumpen ferner das Bereitstellen einer Dichtung mit einer Oberfläche der Vorrichtung zur Aufweitung (100, 300) umfasst, und
wobei das Aufpumpen ferner das Bereitstellen einer Dichtung mit einer Hülse (240) umfasst, welche die Vorrichtung zur Aufweitung (100, 300) umgibt.

14. Verfahren zur Herstellung einer Vorrichtung zur Untertage-Aufweitung (100, 300), wobei das Verfahren Folgendes umfasst:
Ausbilden, durch additive Fertigung, einer Vorrichtung zur Aufweitung (100, 300), die ein aufweitbares Element (102) umfasst, das eine monolithische Wandstruktur aufweist, die eine Längsachse (A-A) umschreibt und einen Raum zum Aufnehmen eines unter Druck stehenden Fluids zur Verwendung beim Aufpumpen des aufweitbaren Elements (102) zwischen einer nicht aufgeweiteten Konfiguration und einer aufgeweiteten Konfiguration umschließt, wobei die Wandstruktur ein anfängliches nicht aufgeweitetes Profil aufweist, bei dem eine Umfangslänge der Wandstruktur größer ist als ein äußerer Begrenzungslinienumfang der Wandstruktur, wobei der äußere Begrenzungslinienumfang durch eine äußere Hüllkurve der Wandstruktur definiert ist,
wobei das anfängliche nicht aufgeweitete Profil durch Aufpumpen umformbar ist, um den äußeren Begrenzungslinienumfang zu vergrößern.

15. Verfahren nach Anspruch 14, wobei das Ausbilden der Vorrichtung zur Aufweitung (100, 300) das Ausbilden der Vorrichtung zur Aufweitung (100, 300) auf der Grundlage von einem oder mehreren Parametern eines Bohrlochs umfasst; und/oder wobei das Verfahren ferner Folgendes umfasst:
Sammeln des einen oder der mehreren Parameter des Bohrlochs.

## Revendications

1. Appareil d'expansion de fond de trou (100, 300) comprenant :
un élément expansible (102) ayant une structure de paroi monolithique circonscrivant un axe longitudinal (A-A) et renfermant un espace destiné à recevoir un fluide pressurisé destiné à être utilisé pour gonfler l'élément expansible (102) entre une configuration non expansée et une configuration expansée ;
la structure de paroi étant formée par fabrication additive pour avoir un profil initial non expansé dans lequel une longueur de périmètre de la structure de paroi est supérieure à un périmètre de jauge extérieur de la structure de paroi, le périmètre de jauge extérieur étant défini par une enveloppe externe de la structure de paroi,
dans lequel l'expansion pendant le gonflage est obtenue en reformant le profil initial non expansé de la structure de paroi pour augmenter le périmètre de jauge extérieur.

2. Appareil d'expansion (100, 300) selon la revendication 1, dans lequel la longueur de périmètre de la structure de paroi varie le long de l'axe longitudinal (A-A).

3. Appareil d'expansion (100, 300) selon la revendication 1 ou 2, dans lequel la structure de paroi comprend :
une première longueur de périmètre en un premier emplacement axial ;
une deuxième longueur de périmètre en un deuxième emplacement axial ; et
une troisième longueur de périmètre en un troisième emplacement axial qui est entre le premier et le deuxième emplacement axial, et facultativement dans lequel la troisième longueur de périmètre est supérieure aux première et deuxième longueurs de périmètre.

4. Appareil d'expansion (100, 300) selon la revendication 3, dans lequel :
un premier angle de flanc est formé entre l'axe longitudinal (A-A) et une ligne reliant le premier emplacement axial et le troisième emplacement axial,
un deuxième angle de flanc est formé entre l'axe longitudinal (A-A) et une ligne reliant le deuxième emplacement axial et le troisième emplacement axial, et
le premier et le deuxième angle de flanc sont égaux.

5. Appareil d'expansion (100, 300) selon l'une quelconque des revendications 1 à 4, dans lequel une longueur de périmètre intérieur de la structure de paroi varie le long de l'axe longitudinal (A-A).

6. Appareil d'expansion (100, 300) selon l'une quelconque des revendications 1 à 5, dans lequel la structure de paroi comprend :
une première longueur de périmètre intérieur en un premier emplacement axial ;
une deuxième longueur de périmètre intérieur en un deuxième emplacement axial ; et
une troisième longueur de périmètre intérieur en un troisième emplacement axial qui est entre le premier et le deuxième emplacement axial, et facultativement dans lequel la troisième longueur de périmètre intérieur est supérieure aux première et deuxième longueurs de périmètre intérieur.

7. Appareil d'expansion (100, 300) selon l'une quelconque des revendications 1 à 6, dans lequel la structure de paroi comprend :
une première section (110) ;
une deuxième section (112) ; et
une troisième section (114), la troisième section(114) étant longitudinalement entre la première et la deuxième section (110, 112), et facultativement dans lequel la structure de paroi a une épaisseur plus importante dans une zone de transition entre la première et la troisième section (110, 114) et/ou entre la troisième et la deuxième section (114, 112).

8. Appareil d'expansion (100, 300) selon la revendication 7, dans lequel le périmètre de jauge extérieur augmente ou diminue à travers la première et/ou la deuxième section (110, 112), et/ou dans lequel le périmètre de jauge extérieur reste constant à travers la troisième section (114), et/ou dans lequel au moins l'un de ce qui suit s'applique : l'élément expansible (102) est creux, l'appareil d'expansion (100, 300) est longitudinalement asymétrique, et l'élément expansible (102) est sensiblement inélastique.

9. Appareil d'expansion (100, 300) selon l'une quelconque des revendications 1 à 8, dans lequel la structure de paroi comprend des plis (106), et facultativement au moins l'un de ce qui suit s'applique :
les plis (106) sont répartis de manière circonférentielle,
les plis (106) définissent une section transversale généralement serpentine dans une direction circonférentielle,
les plis (106) s'étendent longitudinalement,
chaque pli (106) a une profondeur associée et la profondeur du pli varie le long de l'axe longitudinal (A-A) de la structure de paroi, et
chaque pli (106) a une section généralement arquée avec des sections s'étendant axialement à partir d'une extrémité de celle-ci.

10. Appareil d'expansion (100, 300) selon l'une quelconque des revendications 1 à 9, comprenant en outre une couche entourant la structure de paroi, la couche étant configurée pour créer un joint dans la configuration expansée, et facultativement dans lequel la couche comprend un revêtement, une protection, un manchon ou une gaine.

11. Programme informatique comprenant des instructions exécutables par ordinateur qui, lorsqu'elles sont exécutées par un processeur (8), amènent le processeur (8) à commander un appareil de fabrication additive pour qu'il fabrique l'appareil d'expansion (100, 300) selon l'une quelconque des revendications 1 à 10.

12. Procédé de fabrication d'un appareil d'expansion (100, 300) par fabrication additive, le procédé comprenant :
l'obtention d'un fichier électronique représentant une géométrie de l'appareil d'expansion (100) selon l'une quelconque des revendications 1 à 10 ; et
la commande d'un appareil de fabrication additive pour fabriquer, en une ou plusieurs étapes de fabrication additive, l'appareil d'expansion (100, 300) selon la géométrie spécifiée dans le fichier électronique.

13. Procédé de réalisation d'un joint, le procédé comprenant :
la localisation de l'appareil d'expansion (100, 300) selon l'une quelconque des revendications 1 à 10 dans un puits de forage ; et
le gonflage de l'appareil d'expansion (100, 300) dans le puits de forage pour fournir un joint, et facultativement au moins l'un de ce qui suit :
dans lequel le gonflage comprend en outre l'augmentation du périmètre de jauge extérieur de la structure de paroi de l'appareil d'expansion(100, 300),
dans lequel le gonflage comprend en outre la fourniture d'un joint avec une surface de l'appareil d'expansion (100, 300), et
dans lequel le gonflage comprend en outre la fourniture d'un joint avec un manchon (240) entourant l'appareil d'expansion (100, 300).

14. Procédé de fabrication d'un appareil d'expansion de fond de trou (100, 300), comprenant :
la formation, par fabrication additive, d'un appareil d'expansion (100, 300) comprenant un élément expansible (102) ayant une structure de paroi monolithique circonscrivant un axe longitudinal (A-A) et renfermant un espace destiné à recevoir un fluide pressurisé destiné à être utilisé pour gonfler l'élément expansible (102) entre une configuration non expansée et une configuration expansée, la structure de paroi ayant un profil initial non expansé dans lequel une longueur de périmètre de la structure de paroi est supérieure à un périmètre de jauge extérieur de la structure de paroi, le périmètre de jauge extérieur étant défini par une enveloppe externe de la structure de paroi,
dans lequel le profil initial non expansé est réformable par gonflage pour augmenter le périmètre de jauge extérieur.

15. Procédé selon la revendication 14, dans lequel la formation de l'appareil d'expansion (100, 300) comprend la formation de l'appareil d'expansion (100, 300) sur la base d'un ou de plusieurs paramètres d'un puits ; et/ou le procédé comprend en outre :
la collecte des un ou plusieurs paramètres du puits.
